# EUROPEAN PATENT APPLICATION

(11) **EP 4 782 978 A1**
(43) Date of publication of application: **29.07.2026**
(21) Application number: 25795563.3
(22) Date of filing: 23.10.2025
(51) Int. Cl.: G06F 3/0484, G06F 3/0481, G06F 1/16, G06N 3/04, H04M 1/72454

(54) **ELECTRONIC DEVICE INCLUDING FLEXIBLE DISPLAY, AND OPERATION METHOD AND STORAGE MEDIUM THEREOF**

(30) Priority: 02.12.2024 KR 20240176260; 30.12.2024 KR 20240200807
(71) Applicant: Samsung Electronics Co., Ltd., Suwon-si, Gyeonggi-do 16677 (KR)
(72) Inventor: LEE, Eunbi, Suwon-si, Gyeonggi-do 16677 (KR); HONG, Hyunchul, Suwon-si, Gyeonggi-do 16677 (KR); CHOI, Jinug, Suwon-si, Gyeonggi-do 16677 (KR); CHUN, Jinwook, Suwon-si, Gyeonggi-do 16677 (KR); YOON, Shinhyuk, Suwon-si, Gyeonggi-do 16677 (KR); KIM, Byoungjun, Suwon-si, Gyeonggi-do 16677 (KR); KANG, Daewon, Suwon-si, Gyeonggi-do 16677 (KR); CHO, Sujeong, Suwon-si, Gyeonggi-do 16677 (KR); LEE, Jungwoo, Suwon-si, Gyeonggi-do 16677 (KR)
(74) Representative: Appleyard Lees IP LLP
(86) International application number: PCT/KR2025/016890
(87) International publication number: WO 2026/121553

(57) **Abstract**

An electronic device capable of being arranged in a folding state including a fully folded state, a partially folded state and a fully unfolded state may comprise at least one processor including processing circuitry and memory storing instructions. The instructions may, when individually or collectively executed by the at least one processor, may cause the electronic device to display, in the fully folded state, a first screen of a first application through the second display, based on identifying a first change from the fully folded state to the partially folded state, identify at least one artificial intelligence function associated with execution of the first application, and display, in a display area of the first display visually exposed in the partially folded state, a second screen including a user interface (UI) indicating the at least one AI function, and based on a first user input for selecting a first AI function among the at least one AI function, apply the selected first AI function to the first application. Other various embodiments are also available.

## Description

### [Technical Field]

The disclosure relates to an electronic device including a flexible display, an operation method thereof, and a storage medium according to an embodiment.

### [Background Art]

The artificial intelligence (AI) function of electronic devices (e.g., smartphones) aims to provide a better user experience and increase the energy efficiency of electronic devices by assisting users in various tasks such as taking photos, editing, and writing text.

As electronic devices including flexible displays have become more widespread in recent years, the importance of technology for controlling the screen displayed on the flexible display is increasing.

The above-described information may be provided as related art for the purpose of helping understanding of the disclosure. No claim or determination is made as to whether any of the foregoing is applicable as background art in relation to the disclosure.

### [Disclosure of Invention]

### [Solution to Problems]

According to an embodiment, an electronic device capable of being arranged in a folding state including a fully folded state, a partially folded state and a fully unfolded state may comprise a housing including a first housing, a second housing, and a third housing. In the fully unfolded state of the electronic device, the second housing may be positioned between the first housing and the third housing. The electronic device may comprise a first hinge structure configured to rotatably connect the first housing and the second housing, and a second hinge structure configured to rotatably connect the second housing and the third housing. The electronic device may comprise a first display including a first display area corresponding to the first housing, a second display area corresponding to the second housing, and a third display area corresponding to the third housing. The electronic device may comprise a second display configured to face a direction opposite to a direction which the first display faces in the fully unfolded state of the electronic device. The electronic device may comprise at least one sensor including sensing circuitry, at least one processor including processing circuitry, and memory storing instructions. The instructions may, when executed by the at least one processor individually or collectively, cause the electronic device to identify a folding state of the electronic device. The instructions may, when executed by the at least one processor individually or collectively, cause the electronic device to display, in the fully folded state, a first screen of a first application through the second display. The instructions may, when executed by the at least one processor individually or collectively, cause the electronic device to, based on identifying a first change from the fully folded state to the partially folded state, identify at least one artificial intelligence function associated with execution of the first application, and display, in a display area of the first display visually exposed in the partially folded state, a second screen including a user interface indicating the at least one AI function. The instructions may, when executed by the at least one processor individually or collectively, cause the electronic device to, based on a first user input for selecting a first AI function among the at least one AI function, apply the selected first AI function to the first application.

According to an embodiment, a method for operating an electronic device may comprise identifying a folding state of the electronic device. The folding state may include a fully folded state, a partially folded state, and a fully unfolded state. The method may comprise displaying, in the fully folded state, a first screen of a first application through a second display of the electronic device. The method may comprise, based on identifying a first change from the fully folded state to the partially folded state, identifying at least one artificial intelligence (AI) function associated with execution of the first application, and display, in a display area visually exposed in the partially folded state in a first display 202, 302 of the electronic device 101, 200, 300, a second screen including a user interface (UI) indicating the at least one AI function. The method may comprise, based on a first user input for selecting a first AI function among the at least one AI function, applying the selected first AI function to the first application.

According to an embodiment, in a non-transitory computer-readable storage medium storing instructions, the instructions may, when individually or collectively executed by at least one processor of an electronic device, cause the electronic device to perform at least one operation. The at least one operation may comprise identifying a folding state of the electronic device. The folding state may include a fully folded state, a partially folded state, and a fully unfolded state. The at least one operation may comprise displaying, in the fully folded state, a first screen of a first application through a second display of the electronic device. The at least one operation may comprise, based on identifying a first change from the fully folded state to the partially folded state, identifying at least one artificial intelligence (AI) function associated with execution of the first application, and display, in a display area visually exposed in the partially folded state in a first display 202, 302 of the electronic device 101, 200, 300, a second screen including a user interface (UI) indicating the at least one AI function. The at least one operation may comprise, based on a first user input for selecting a first AI function among the at least one AI function, applying the selected first AI function to the first application.

### [Brief Description of Drawings]

The same or similar reference denotations may be used to refer to the same or similar elements throughout the specification and the drawings.
FIG. 1A is a block diagram illustrating an electronic device in a network environment according to an embodiment;
FIG. 1B is a block diagram illustrating an electronic device 101 according to an embodiment.;
FIG. 2A is a perspective view illustrating an unfolded state of a first type of electronic device according to an embodiment;
FIG. 2B is a perspective view illustrating an unfolded state of a first type of electronic device according to an embodiment;
FIG. 2C is a perspective view illustrating a fully folded state of a first type of electronic device according to an embodiment;
FIG. 2D is a view illustrating a partially folded state of a first type of electronic device according to an embodiment;
FIG. 2E is a view illustrating a partially folded state of a first type of electronic device according to an embodiment;
FIG. 3A is a perspective view illustrating an unfolded state of a second type of electronic device according to an embodiment;
FIG. 3B is a perspective view illustrating an unfolded state of a second type of electronic device according to an embodiment;
FIG. 3C is a view illustrating a folded state of a second type of electronic device according to an embodiment;
FIG. 4A is a view illustrating types of an electronic device according to an embodiment;
FIG. 4B is a front view illustrating an unfolded state of a third type of electronic device according to an embodiment.
FIG. 4C is a rear view illustrating an unfolded state of a third type of electronic device according to an embodiment;
FIG. 4D is a perspective view illustrating a folded state of a third type of electronic device according to an embodiment.
FIG. 4E is a front perspective view illustrating a single-stage folded state of a third type of electronic device according to an embodiment.
FIG. 4F is a rear perspective view illustrating a single-stage folded state of a third type of electronic device according to an embodiment;
FIG. 4G is a front view illustrating a folded state of a third type of electronic device according to an embodiment;
FIG. 4H is a rear view illustrating a folded state of a third type of electronic device according to an embodiment;
FIG. 5 is a flowchart illustrating an operation method of an electronic device according to an embodiment;
FIG. 6 is a flowchart illustrating an operation method of an electronic device according to an embodiment;
FIG. 7 is a view illustrating operations of an electronic device according to an embodiment;
FIG. 8 is a view illustrating operations of an electronic device according to an embodiment;
FIG. 9 is a view illustrating operations of an electronic device according to an embodiment;
FIG. 10 is a view illustrating operations of an electronic device according to an embodiment;
FIG. 11 is a view illustrating operations of an electronic device according to an embodiment;
FIG. 12 is a view illustrating operations of an electronic device according to an embodiment;
FIG. 13 is a view illustrating operations of an electronic device according to an embodiment;
FIG. 14 is a view illustrating operations of an electronic device according to an embodiment.
FIG. 15 is a view illustrating operations of an electronic device according to an embodiment; and
FIG. 16 is a view illustrating operations of an electronic device according to an embodiment.

### [Detailed Description]

Hereinafter, embodiments of the disclosure are described in detail with reference to the drawings so that those skilled in the art to which the disclosure pertains may easily practice the disclosure. However, the disclosure may be implemented in other various forms and is not limited to the embodiments set forth herein. The same or similar reference denotations may be used to refer to the same or similar elements throughout the specification and the drawings.

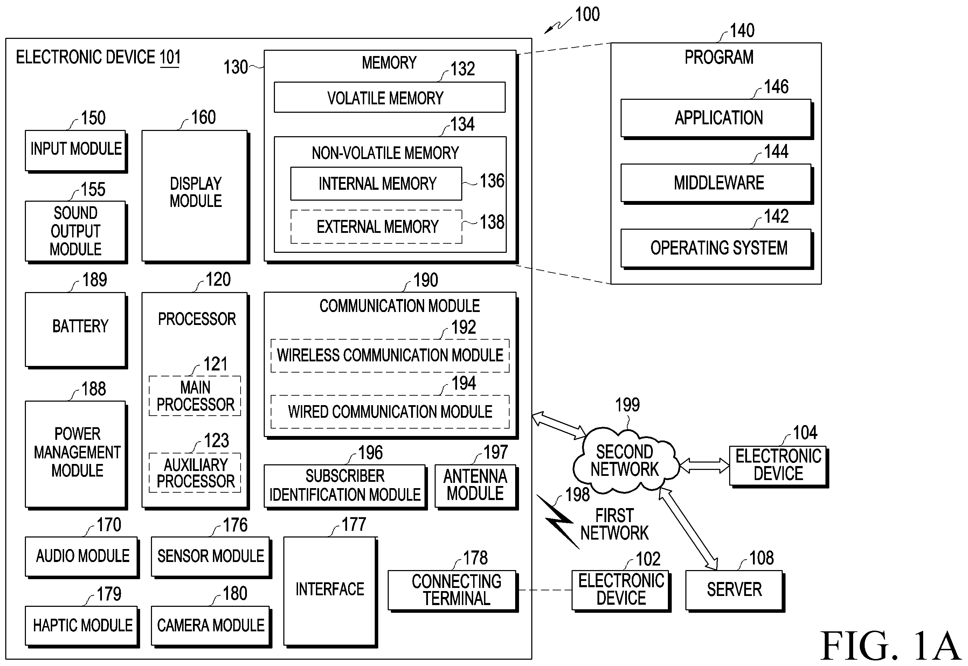

FIG. 1A is a block diagram illustrating an electronic device 101 in a network environment 100 according to an embodiment.

Referring to FIG. 1A, the electronic device 101 in the network environment 100 may communicate with at least one of an electronic device 102 via a first network 198 (e.g., a short-range wireless communication network), or an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module (SIM) 196, or an antenna module 197. In an embodiment, at least one (e.g., the connecting terminal 178) of the components may be omitted from the electronic device 101, or one or more other components may be added in the electronic device 101. According to an embodiment, some (e.g., the sensor module 176, the camera module 180, or the antenna module 197) of the components may be integrated into a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to an embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be configured to use lower power than the main processor 121 or to be specified for a designated function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. The artificial intelligence model may be generated via machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted Boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thereto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by other component (e.g., the processor 120) of the electronic device 101, from the outside (e.g., a user) of the electronic device 101. The input module 150 may include, for example, a microphone, a mouse, a keyboard, keys (e.g., buttons), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display 160 may include, for example, a display, a hologram device, or a projector and control circuitry to control a corresponding one of the display, hologram device, and projector. According to an embodiment, the display 160 may include a touch sensor configured to detect a touch, or a pressure sensor configured to measure the intensity of a force generated by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an accelerometer, a grip sensor, a proximity sensor, a color sensor, an infrared (IR) sensor, a biometric sensor, a temperature sensor, a humidity sensor, or an illuminance sensor. In an embodiment, the sensor module 176 may include sensor circuitry. In an embodiment, the sensor module 176 may include a first sensor, a second sensor, and/or a third sensor. In an embodiment, the sensor circuitry may include a first sensor, a second sensor, and/or a third sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, an HDMI connector, a USB connector, an SD card connector, or an audio connector (e.g., a headphone connector).

The haptic module 179 may convert an electrical signal into a mechanical stimulus (e.g., a vibration or motion) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to an embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device 104 via a first network 198 (e.g., a short-range communication network, such as BluetoothTM, wireless-fidelity (Wi-Fi) direct, or infrared data association (IrDA)) or a second network 199 (e.g., a long-range communication network, such as a legacy cellular network, a 5G network, a next-generation communication network, the Internet, or a computer network (e.g., local area network (LAN) or wide area network (WAN)). These various types of communication modules may be implemented as a single component (e.g., a single chip), or may be implemented as multi components (e.g., multi chips) separate from each other. The wireless communication module 192 may identify or authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beamforming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device). According to an embodiment, the antenna module 197 may include one antenna including a radiator formed of a conductor or conductive pattern formed on a substrate (e.g., a printed circuit board (PCB)). According to an embodiment, the antenna module 197 may include a plurality of antennas (e.g., an antenna array). In this case, at least one antenna appropriate for a communication scheme used in a communication network, such as the first network 198 or the second network 199, may be selected from the plurality of antennas by, e.g., the communication module 190. The signal or the power may then be transmitted or received between the communication module 190 and the external electronic device via the selected at least one antenna. According to an embodiment, other parts (e.g., radio frequency integrated circuit (RFIC)) than the radiator may be further formed as part of the antenna module 197.

According to an embodiment, the antenna module 197 may form a mmWave antenna module. According to an embodiment, the mmWave antenna module may include a printed circuit board, a RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. The external electronic devices 102 or 104 each may be a device of the same or a different type from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In another embodiment, the external electronic device 104 may include an Internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or health-care) based on 5G communication technology or IoT-related technology.

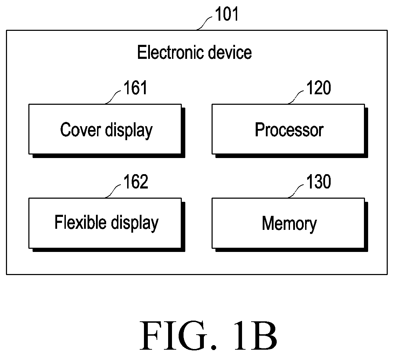

FIG. 1B is a block diagram illustrating an electronic device 101 according to an embodiment.

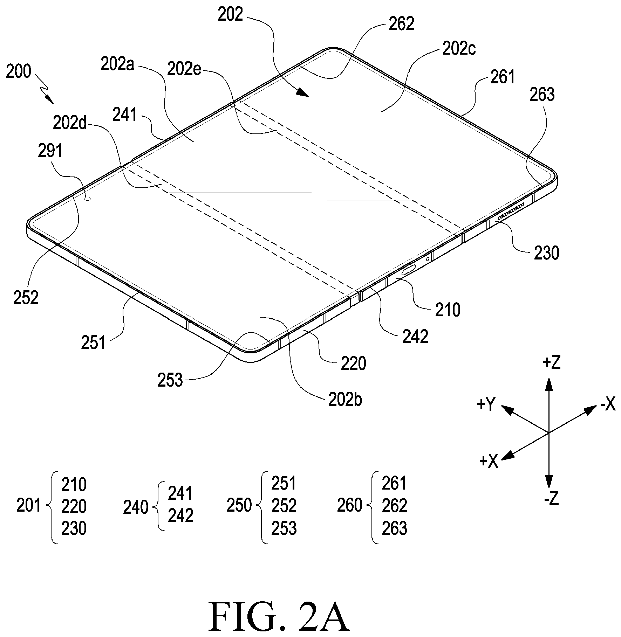

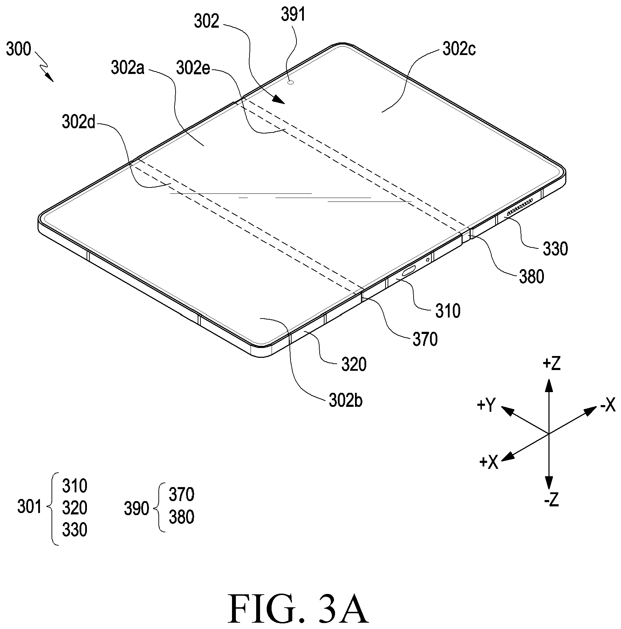

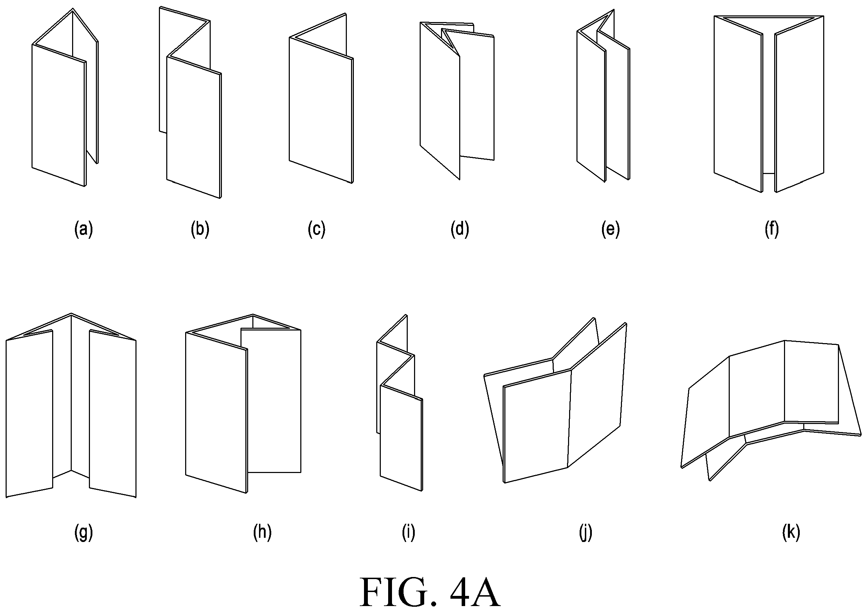

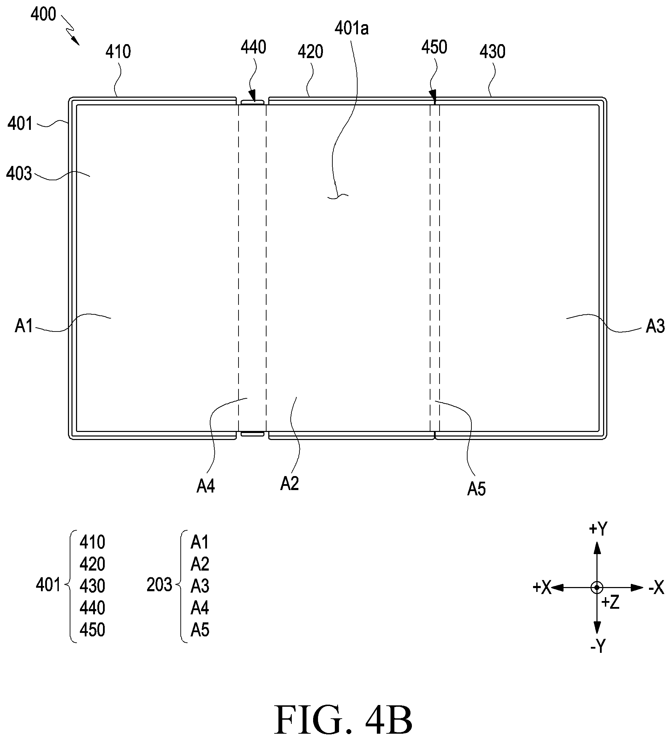

Referring to FIG. 1B, according to an embodiment, an electronic device 101 (e.g., the display module 160 of FIG. 1) may include a flexible display 162 (e.g., 202 of FIG. 2A, 302 of FIG. 3A, the flexible display of FIG. 4A, or 403 of FIG. 4B). According to an embodiment, the electronic device 101 (e.g., the display module 160 of FIG. 1) may include a cover display 161 (e.g., 203 of FIG. 2A, 303 of FIG. 3A, or the cover display of F FIG. 4A). For example, the cover display 161 may be configured to face a direction opposite to the direction which the flexible display 162 faces in an unfolded state of the electronic device 101. According to an embodiment, the electronic device 101 may not include the cover display 161. For example, a portion of the flexible display 403 of the electronic device 400 of FIG. 4B may be exposed to the outside when the electronic device 400 is in a fully folded state of the electronic device 400, thereby performing an operation performed by the cover display 161 of the electronic device 101.

According to an embodiment, the electronic device 101 may include a housing (e.g., 201 of FIG. 2A, 301 of FIG. 3A, the housing of FIG. 4A, or 401 of FIG. 4B) configured to form an outer surface of the electronic device 101. For example, the housing of the electronic device 101 (e.g., 201 of FIG. 2A, 301 of FIG. 3A, the housing of FIG. 4A, or 401 of FIG. 4B) may be a foldable housing (e.g., 201 of FIG. 2A, 301 of FIG. 3A, the housing of FIG. 4A, or 401 of FIG. 4B). According to an embodiment, the foldable housing (e.g., 201 of FIG. 2A, 301 of FIG. 3A, the housing of FIG. 4A, or 401 of FIG. 4B) may include a plurality of housing parts (e.g., 210, 220, 230 of FIG. 2A, 310, 320, 330 of FIG. 3A, the housings of FIG. 4A, or 410, 420, 430 of FIG. 4B).

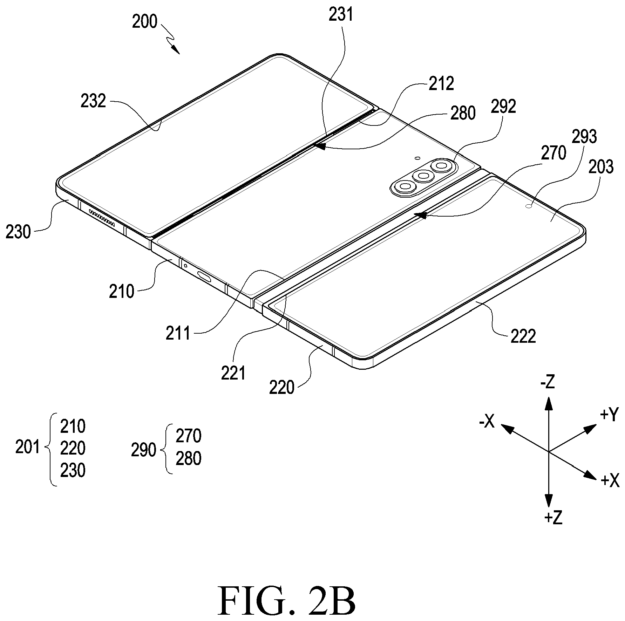

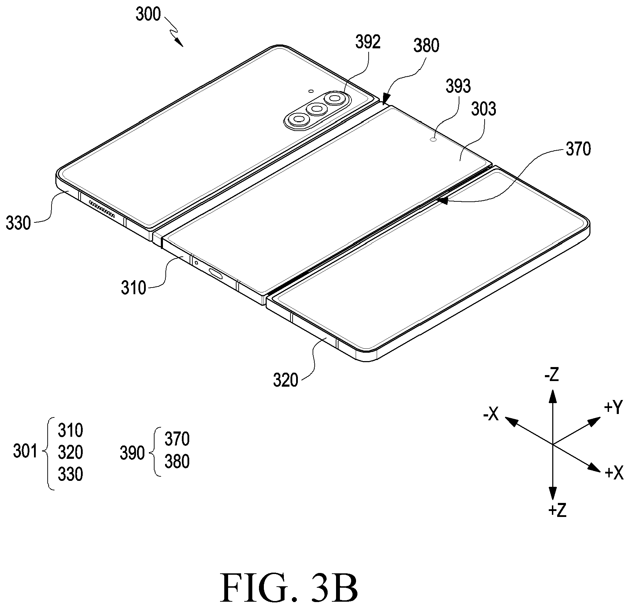

According to an embodiment, the electronic device 101 may include at least one hinge (e.g., at least one hinge structure)(e.g., 270, 280 of FIG. 2B, 370, 380 of FIG. 3B, the hinge of FIG. 4A, or 440, 450 of FIG. 4B) configured to rotatably connect the housings (e.g., the plurality of housing parts of the foldable housing) (e.g., 210, 220, 230 of FIG. 2A, 310, 320, 330 of FIG. 3A, the housings of FIG. 4A, or 410, 420, 430 of FIG. 4B).

According to an embodiment, the flexible display 162 may be disposed in the foldable housing (e.g., 201 of FIG. 2A, 301 of FIG. 3A, the housing of FIG. 4A, or 401 of FIG. 4B). For example, the flexible display 162 may be disposed across the plurality of housing parts (e.g., 210, 220, 230 of FIG. 2A, 310, 320, 330 of FIG. 3A, the housings of FIG. 4A, or 410, 420, 430 of FIG. 4B) of the foldable housing (e.g., 201 of FIG. 2A, 301 of FIG. 3A, the housing of FIG. 4A, or 401 of FIG. 4B). According to an embodiment, as described below, in the flexible display 162, as the at least one hinge (e.g., at least one hinge structure) (e.g., 270 and 280 of FIG. 2B, 370 and 380 of FIG. 3B, the hinge of FIG. 4A, or 440 and 450 of FIG. 4B) rotates, a foldable area (e.g., 202d and 202e of FIG. 2A, 302d and 302e of FIG. 3A, or A4 and A5 of FIG. 4B) among the plurality of areas of the area (e.g., the flexible display 162) corresponding to at least one hinge (e.g., at least one hinge structure) (e.g., 270 and 280 of FIG. 2B, 370 and 380 of FIG. 3B, the hinge of FIG. 4A, or 440 and 450 of FIG. 4B) may be folded.

Referring to FIGS. 2A, 3A, and 4A, types of the electronic device 101 are described.

FIG. 2A is a perspective view illustrating an unfolded state of a first type of electronic device 200 according to an embodiment. FIG. 2B is a perspective view illustrating an unfolded state of a first type of electronic device 200 according to an embodiment. FIG. 2A may be a view of one side surface (e.g., front surface) of the electronic device 200 as obliquely viewed. FIG. 2B may be a view of the other side surface (e.g., rear surface) of the electronic device 200 as obliquely viewed. According to an embodiment, the electronic device 200 may be the electronic device 101 of FIG. 1A.

According to an embodiment, the electronic device 200 may include a housing 201. The electronic device 200 may include a display 202. The housing 201 may form a space where the display 202 is disposed. The display 202 may be a flexible display 202. At least a portion of the display 202 may be folded or unfolded, depending on the folding state of the electronic device 200.

According to an embodiment, the housing 201 may include a first housing 210. The housing 201 may include a second housing 220. The housing 201 may include a third housing 230. The first housing 210 may be disposed between the second housing 220 and the third housing 230. The second housing 220 may be rotatably coupled to the first housing 210. The third housing 230 may be rotatably coupled to the first housing 210. The display 202 may be visually exposed through a first portion of the first housing 210, a second portion of the second housing 220, and a third portion of the third housing 230. The display 202 may include a first display area 202a corresponding to the first housing 210, a second display area 202b corresponding to the second housing 220, and a third display area 202c corresponding to the third housing 230. According to an embodiment, the first display area 202a may include a portion of the foldable area 202d. According to an embodiment, the second display area 202b may include a portion of the foldable area 202d. According to an embodiment, the first display area 202a may contact the second display area 202b. According to an embodiment, the first display area 202a may include a portion of the foldable area 202e. According to an embodiment, the third display area 202c may include a portion of the foldable area 202e. According to an embodiment, the first display area 202a may contact the third display area 202c.

According to an embodiment, a camera 291 (e.g., a front camera) may be disposed in one area of the display 202. The camera 291 (e.g., a front camera) may be configured to capture a scene in the direction that the display 202 faces in the fully unfolded state of the electronic device 200. For example, the camera 291 may be disposed in the first display area 202a. For example, the camera 291 may be disposed in the second display area 202b. For example, the camera 291 may be disposed in the third display area 202c. Although FIG. 2A illustrates that the camera 291 is disposed in the first display area 202a, this is exemplary.

According to an embodiment, referring to FIG. 2B, the electronic device 200 may include a camera 292 (e.g., a rear camera) exposed through the rear surface of the housing 201. The camera 292 (e.g., a rear camera) may be configured to capture a scene in the direction opposite to the direction that the display 202 (e.g., a flexible display) faces in the fully unfolded state of the electronic device 200. For example, the camera 292 may be exposed through the rear surface of the first housing 210. For example, the camera 292 may be exposed through the rear surface of the second housing 220. For example, the camera 292 may be exposed through the rear surface of the third housing 230. Although FIG. 2B illustrates that the camera 292 is exposed through the rear surface of the first housing 210, this is exemplary.

According to an embodiment, the electronic device 200 may include supports 240, 250, and 260. The supports 240, 250, and 260 may support the display 202. The supports 240, 250, and 260 may be coupled to the housing 201. The supports 240, 250, and 260 may be disposed to surround edges of the display 202. The supports 240, 250, and 260 may extend along the circumference of the housing 201. The supports 240, 250, and 260 may include a first support 240 disposed in the first housing 210, a second support 250 disposed in the second housing 220, and a third support 260 disposed in the third housing 230.

According to an embodiment, the supports 240, 250, and 260 may include a first support 240. The first support 240 may support at least a portion of the display 202. The first support 240 may be disposed along an edge of the first housing 210. The first support 240 may include a 1-1th support 241 and a 1-2th support 242. At least a portion of the display 202 may be disposed between the 1-1th support 241 and the 1-2th support 242. The 1-1th support 241 may be disposed at one end portion of the first housing 210, and the 1-2th support 242 may be disposed at the other end portion of the first housing 210. Each of the first, second, and third supports 240, 250, and 260 may be referred to as a "support". The support 240, 250, or 260 may include a non-conductive member. The support 240, 250, or 260 may be referred to as a "deco," "finishing member," or "non-conductive member."

According to an embodiment, the supports 240, 250, and 260 may include a second support 250. The second support 250 may support at least a portion of the display 202. The second support 250 may be disposed along an edge of the second housing 220. The second support 250 may include a 2-1th support 251, a 2-2th support 252, and a 2-3th support 253. At least a portion of the display 202 may be disposed between the 2-2th support 252 and the 2-3th support 253. The 2-1th support 251 may connect the 2-2th support 252 and the 2-3th support 253. The 2-1th support 251 may extend along an edge of the second housing 220. The 2-1th support 251 may be referred to as a "support frame" or a "first support frame". Each of the 2-2th support 252 and the 2-3th support 253 may be referred to as a "second support frame".

According to an embodiment, the supports 240, 250, and 260 may include a third support 260. The third support 260 may support at least a portion of the display 202. The third support 260 may be disposed along an edge of the third housing 230. The third support 260 may include a 3-1th support 261, a 3-2th support 262, and a 3-3th support 263. At least a portion of the display 202 may be disposed between the 3-2th support 262 and the 3-3th support 263. The 3-1th support 261 may connect the 3-2th support 262 and the 3-3th support 263. The 3-1th support 261 may extend along an edge (e.g., the edge 232 of FIG. 2B) of the third housing 230. The 3-1th support 261 may be referred to as a "support frame" or a "first support frame". Each of the 3-2th support 262 and the 3-3th support 263 may be referred to as a "second support frame".

According to an embodiment, the first housing 210 may include a 1-1th side member 211 and a 1-2th side member 212. The 1-1th side member 211 and the 1-2th side member 212 may form two opposite side surfaces, respectively, of the first housing 210. The second housing 220 may be coupled to the 1-1th side member portion 211. The third housing 230 may be coupled to the 1-2th side member 212. The 1-1th side member 211 may be referred to as a "first coupling portion". The 1-2th side member 212 may be referred to as a "second coupling portion". The 1-1th side member 211 may be referred to as a "first portion". The 1-2th side member 212 may be referred to as a "second portion".

According to an embodiment, the second housing 220 may include a 2-1th side member 221 and a 2-2th side member 222. The 2-1th side member 221 and the 2-2th side member 222 may form two opposite side surfaces, respectively, of the second housing 220. The 2-1th side member 221 may be coupled to the first housing 210. The 2-2th side member 222 may form a side surface of the housing 201. The 2-2th side member 222 may be referred to as an "edge". The 2-1th side member 221 may be referred to as a "third side member". The 2-2th side member 222 may be referred to as a "fourth side member".

According to an embodiment, the electronic device 200 may include a cover display 203. The second housing 220 may form a space where the cover display 203 is disposed. For example, the cover display 203 may be disposed between the 2-1th side member 221 and the 2-2th side member 222. The cover display 203 may be a flat display.

In an embodiment, the second housing 220 may be disposed so that one side thereof surrounds an edge of a portion of the display 202 and the other side thereof surrounds an edge of the cover display 203. The electronic device 200 may include an inner space of the second housing 220 formed by being surrounding by the second housing 220 having the cover display 203 as one surface, a portion of the display 202 as the other side parallel to the one side, and a side surface including a 2-1th side member 221 and a 2-2th side member 222.

According to an embodiment, a camera 293 (e.g., a cover display camera) may be disposed in one area of the second housing 220. The camera 293 (e.g., a cover display camera) may be configured to capture a scene in the direction that the cover display 203 faces. The camera 293 (e.g., a cover display camera) may be configured to capture a scene in the direction opposite to the direction that the display 202 (e.g., a flexible display) faces in the fully unfolded state of the electronic device 200.

According to an embodiment, the first housing 230 may include a 3-1th side member 231 and a 3-2th side member 232. The 3-1th side member 231 and the 3-2th side member 232 may form two opposite side surfaces, respectively, of the third housing 230. The 3-1th side member 231 may be coupled to the first housing 210. The 3-2th side member 232 may form a side surface of the housing 201. The 3-2th side member 232 may be referred to as an "edge". The 3-1th side member 231 may be referred to as a "fifth side member". The 3-2th side member 232 may be referred to as a "sixth side member".

According to an embodiment, the cover display may be disposed in the space formed by the third housing 230. For example, the cover display may be disposed between the 3-1th side member 231 and the 3-2th side member 232. The cover display may be a flat display. According to an embodiment, a camera may be disposed in one area of the cover display.

According to an embodiment, the electronic device 200 may include a first hinge 270 (e.g., a first hinge structure) and a second hinge 280 (e.g., a second hinge structure). The electronic device 200 may include a hinge structure 290 including a first hinge 270 and a second hinge 280. The first hinge 270 may be disposed between the first housing 210 and the second housing 220. The first hinge 270 may be disposed between the 1-1th side member 211 and the 2-1th side member 221. The first hinge 270 may rotatably connect the first housing 210 and the second housing 220. The second hinge 280 may be disposed between the first housing 210 and the third housing 230. The second hinge 280 may be disposed between the 1-2th side member 212 and the 3-1th side member 231. The second hinge 280 may rotatably connect the first housing 210 and the third housing 230. The first hinge 270 may be referred to as a "first hinge member". The second hinge 280 may be referred to as a "second hinge member".

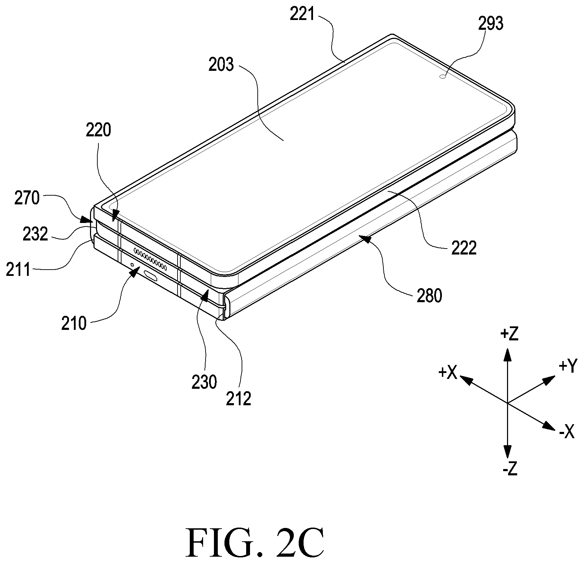

FIG. 2C is a perspective view illustrating a fully folded state of a first type of electronic device 200 according to an embodiment.

According to an embodiment, the second housing 220 may be rotated with respect to the first housing 210. The first hinge 270 may provide a center of rotation to the second housing 220. The first hinge 270 may connect the 1-1th side member 211 and the 2-1th side member 221. The third housing 230 may be rotated with respect to the first housing 210. The second hinge 280 may provide a center of rotation to the third housing 230. The second hinge 280 may connect the 1-2th side member 212 and the 3-1th side member 231.

According to an embodiment, in the fully folded state of the electronic device 200, each of the first, second, and third housings 210, 220, and 230 may be arranged in one direction (e.g., the +Z direction). For example, the third housing 230 may be disposed over (e.g., +Z direction) the first housing 210, and the second housing 220 may be disposed over (e.g., +Z direction) the third housing 230. For example, the third housing 230 may be disposed between the first housing 210 and the second housing 220.

According to an embodiment, in the fully folded state of the electronic device 200, the cover display 203 may be disposed on the externally visible portion of the second housing 220. For example, the cover display 203 may be disposed between the 2-1th side member 221 and the 2-2th side member 222.

The width of the first hinge 270 may be larger than the width of the second hinge 280. For example, in the fully folded state of the electronic device 200, the length of the first hinge 270 extending in the +Z direction may be larger than the length of the second hinge 280 extending in the +Z direction.

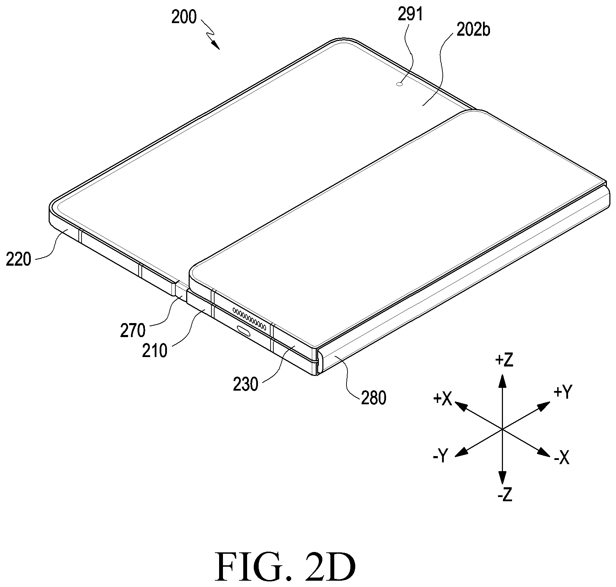

FIG. 2D is a view illustrating a partially folded state of a first type of electronic device 200 according to an embodiment. FIG. 2D may illustrate that only one hinge (e.g., the second hinge 280) of the electronic device 200 is folded while the other hinge (e.g., the first hinge 270) is in a fully unfolded state or half-folded state.

According to an embodiment, the third housing 230 may be rotated with respect to the first housing 210. The second hinge 280 may provide a center of rotation to the third housing 230. As illustrated in FIG. 2D, when the second hinge 280 is fully folded, the third housing 230 may be disposed on the upper side of the first housing 210.

According to an embodiment, the second housing 220 may be rotated with respect to the first housing 210. The first hinge 270 may provide a center of rotation to the second housing 220. As illustrated in FIG. 2D, when the first hinge 270 is fully unfolded, the second housing 220 may be positioned parallel to the first housing 210.

According to an embodiment, as the third housing 230 may be disposed on the upper side of the first housing 210, and the second housing 220 is disposed side by side with the first housing 210, only the second display area 202b disposed on the second housing 220, of the display 202, may be exposed to the outside, and the rear surface of the third housing 230 may face the +Z-axis direction.

According to an embodiment, the electronic device 200 may be deformed so that one hinge (e.g., the second hinge 280) is fully unfolded, and the other hinge (e.g., the first hinge 270) is half-folded. According to an embodiment, in the half-folded state of the electronic device 101, as the second housing 220 is disposed on the upper side of the first housing 210, and the third housing 230 is disposed side by side with the first housing 210, only the third display area 202c disposed on the third housing, of the display 202, may be exposed to the outside, and the rear surface of the third housing 230 may face the -Z-axis direction.

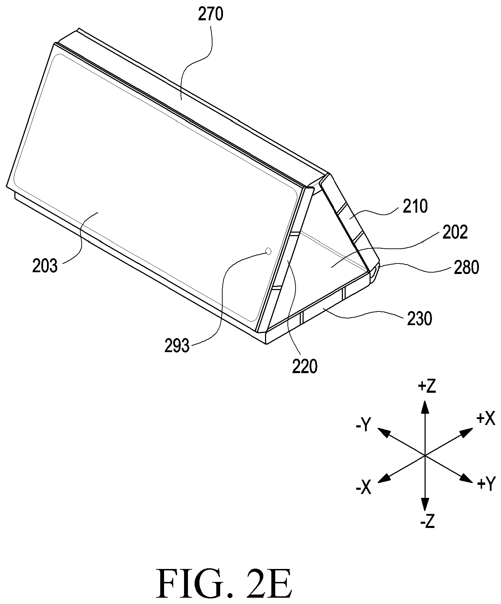

FIG. 2E is a view illustrating a partially folded state of a first type of electronic device 200 according to an embodiment. FIG. 2E may illustrate a state in which the electronic device 200 is folded (semi-folded) so that the plurality of hinges (e.g., the first hinge 270 and the second hinge 280) have an angle within a specific range. For example, the state in which the plurality of hinges (e.g., the first hinge 270 and the second hinge 280) are folded to have an angle within the specific range may be referred to as a prism state or a prism mode. According to an embodiment, as illustrated in FIG. 2E, when the plurality of hinges of the electronic device in a prism state (or prism mode) are disposed parallel to the floor surface so that the length direction of the hinges is parallel to the floor surface, it may be referred to as a prism flex. According to an embodiment, unlike FIG. 2E, when the electronic device is in a standing state and the plurality of hinges of the electronic device in the prism state are disposed perpendicular to the floor surface so that the length direction of the hinges is perpendicular to the floor surface, it may be referred to as a prism stand.

As illustrated in FIG. 2E, when the first hinge 270 providing a center of rotation to the second housing 220 with respect to the first housing 210 is folded to have an angle within a specific range, and the second hinge 280 providing a center of rotation to the third housing 230 with respect to the first housing 210 is folded to have an angle within the specific range, the first housing 210, the second housing 220, and the third housing 230 may form a triangle in the +Y direction and/or the -Y direction.

According to an embodiment, the display 202 may be folded to have a triangular prism-shaped space, and the cover display 203 may be disposed toward the front surface. According to an embodiment, one surface of the third housing 230, where the display 202 is not disposed may face the floor.

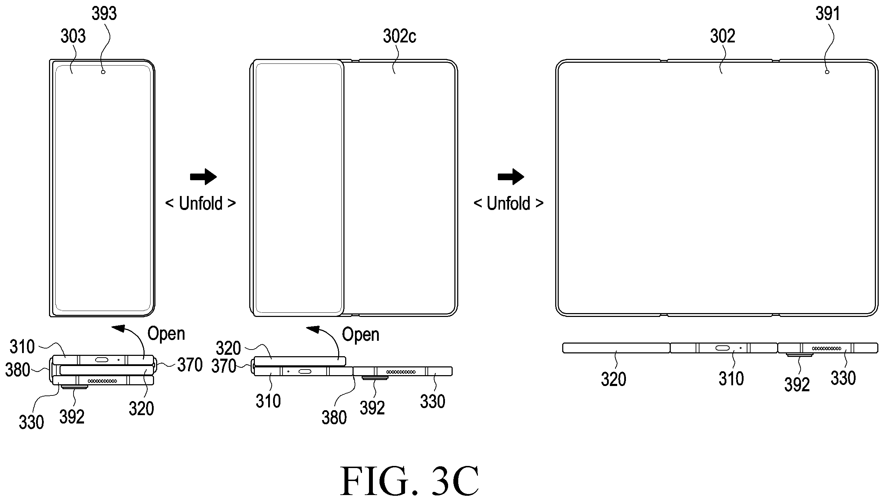

FIGS. 3A, 3B, and 3C are views for describing an electronic device 300 that folds in a different manner as that of the electronic device 200 of FIGS. 2A, 2B, 2C, 2D, and 2E.

FIG. 3A is a perspective view illustrating an unfolded state of a second type of electronic device 300 according to an embodiment. FIG. 3B is a perspective view illustrating an unfolded state of a second type of electronic device 300 according to an embodiment. FIG. 3C is a view illustrating a folded state of a second type of electronic device 300 according to an embodiment. FIG. 3A may be a view of one side surface (e.g., front surface) of the electronic device 300 as obliquely viewed. FIG. 3B may be a view of the other side surface (e.g., rear surface) of the electronic device 300 as obliquely viewed. According to an embodiment, the electronic device 300 may be the electronic device 101 of FIG. 1A.

According to an embodiment, the electronic device 300 may include a housing 301. The electronic device 300 may include a display 302. The housing 301 may form a space where the display 302 is disposed. The display 302 may be a flexible display 302. At least a portion of the display 302 may be folded or unfolded.

According to an embodiment, the housing 301 may include a first housing 310. The housing 301 may include a second housing 320. The housing 301 may include a third housing 330. The first housing 310 may be disposed between the second housing 320 and the third housing 330. The second housing 320 may be rotatably coupled to the first housing 310. The third housing 330 may be rotatably coupled to the first housing 310. The display 302 may be visually exposed through a first portion of the first housing 310, a second portion of the second housing 320, and a third portion of the third housing 330. The display 302 may include a first display area 302a corresponding to the first housing 310, a second display area 302b corresponding to the second housing 320, and a third display area 302c corresponding to the third housing 330. According to an embodiment, the first display area 302a may include a portion of the foldable area 302d. According to an embodiment, the second display area 302b may include a portion of the foldable area 302d. According to an embodiment, the first display area 302a may contact the second display area 302b. According to an embodiment, the first display area 302a may include a portion of the foldable area 302E. According to an embodiment, the third display area 302c may include a portion of the foldable area 302e. According to an embodiment, the first display area 302a may contact the third display area 302c.

According to an embodiment, a camera 391 (e.g., a front camera) may be disposed in one area of the housing 301. The camera 391 (e.g., a front camera) may be configured to capture a scene in the direction that the display 302 faces in the fully unfolded state of the electronic device 300. For example, the camera 391 may be disposed in the first display area 302a. For example, the camera 391 may be disposed in the second display area 302b. For example, the camera 391 may be disposed in the third display area 302c. Although FIG. 3A illustrates that the camera 391 is disposed in the third display area 302c, this is exemplary.

According to an embodiment, referring to FIG. 3B, the electronic device 300 may include a camera 392 (e.g., a rear camera) exposed through the rear surface of the housing 301. The camera 392 (e.g., a rear camera) may be configured to capture a scene in the direction opposite to the direction that the display 302 faces in the fully unfolded state of the electronic device 300. For example, the camera 392 may be exposed through the rear surface of the first housing 310. For example, the camera 392 may be exposed through the rear surface of the second housing 320. For example, the camera 392 may be exposed through the rear surface of the third housing 330. Although FIG. 3B illustrates that the camera 392 is exposed through the rear surface of the third housing 330, this is exemplary.

According to an embodiment, the electronic device 300 may include a cover display 303. The first housing 310 may form a space where the cover display 303 is disposed. The cover display 303 may be a flat display.

According to an embodiment, a camera 393 (e.g., a cover display camera) may be disposed in one area of the cover display 303. The camera 393 (e.g., a cover display camera) may be configured to capture a scene in the direction that the cover display 303 faces. The camera 393 (e.g., a cover display camera) may be configured to capture a scene in the direction opposite to the direction that the display 302 (e.g., a flexible display) faces in the fully unfolded state of the electronic device 300.

According to an embodiment, the cover display may be disposed in the space formed by the second housing 320. For example, the electronic device 300 may include a cover display (e.g., a flat display) disposed on the second housing 320. According to an embodiment, a camera (e.g., a cover display camera) may be disposed in one area of the cover display disposed on the second housing 320.

According to an embodiment, the electronic device 300 may include a first hinge 370 (e.g., a first hinge structure) and a second hinge 380 (e.g., a second hinge structure). The electronic device 300 may include a hinge structure 390 including a first hinge 370 and a second hinge 380. The first hinge 370 may be disposed between the first housing 310 and the second housing 320. The first hinge 370 may rotatably connect the first housing 310 and the second housing 320. The second hinge 380 may be disposed between the first housing 310 and the third housing 330. The second hinge 380 may rotatably connect the first housing 310 and the third housing 330. The first hinge 370 may be referred to as a "first hinge member". The second hinge 380 may be referred to as a "second hinge member".

Referring to FIG. 3C, a folded state or unfolding operation of the electronic device 300 according to an embodiment may be described.

According to an embodiment, the second housing 320 may be rotated with respect to the first housing 310. The first hinge 370 may provide a center of rotation to the second housing 320. The third housing 330 may be rotated with respect to the first housing 310. The second hinge 380 may provide a center of rotation to the third housing 330.

Referring to FIG. 3C, according to an embodiment, in the fully folded state of the electronic device 300, each of the first, second, and third housings 310, 320, and 330 may be arranged in one direction. For example, the second housing 320 may be disposed over (e.g., +Z direction) the third housing 330, and the first housing 310 may be disposed over (e.g., +Z direction) the second housing 320. For example, the second housing 320 may be disposed between the third housing 330 and the first housing 310.

Referring to FIG. 3C, according to an embodiment, in the fully folded state of the electronic device 300, the cover display 303 may be disposed on the externally visible portion of the first housing 310.

Referring to FIG. 3C, the width of the second hinge 380 may be larger than the width of the first hinge 370. For example, in the fully folded state of the electronic device 300, the extended length of the second hinge 380 may be larger than the extended length of the first hinge 370.

Referring to FIG. 3C, according to an embodiment, the electronic device 300 may be in a state in which only one hinge (e.g., the first hinge 370) is fully folded, and the other hinge (e.g., the second hinge 380) is half-folded.

Referring to FIG. 3C, according to an embodiment, the second housing 320 may be rotated with respect to the first housing 310. The first hinge 370 may provide a center of rotation to the second housing 320. When the first hinge 370 is fully folded, and the second hinge 380 is fully unfolded, the second housing 320 may be disposed on the first housing 310.

Referring to FIG. 3C, according to an embodiment, as the second housing 320 is disposed on the upper side of the first housing 310, and the first housing 310 is disposed side by side with the third housing 330, only the third display area 302c disposed on the third housing 330, of the display 302, may be exposed to the outside, and the rear surface of the second housing 320 may be exposed to the outside.

According to an embodiment, the electronic device 300 may be deformed so that one hinge (e.g., the first hinge 370) is fully unfolded, and the other hinge (e.g., the second hinge 380) is half-folded. According to an embodiment, in the half-folded state of the electronic device 101, as the third housing 330 is disposed on the upper side of the first housing 310, and the second housing 320 is disposed side by side with the first housing 310, only the second display area 302b disposed on the second housing 320, of the display 302, may be exposed to the outside.

According to an embodiment, the second housing 320 may be rotated with respect to the first housing 310. The first hinge 370 may provide a center of rotation to the second housing 320. When the first hinge 370 is fully unfolded, and the second hinge 380 is fully unfolded, the first housing 310, the second housing 320, and the third housing 330 may be disposed side by side.

FIG. 4A is a view illustrating types of an electronic device 101 according to an embodiment.

According to an embodiment, FIG. 4A illustrates various examples of an electronic device (e.g., 101 of FIG. 1A) including at least two or more housings and a flexible display (e.g., 162 of FIG. 1B).

According to an embodiment, the electronic device (e.g., 101 of FIG. 1A) may include two or more housings, hinges connected so that the two or more housings are foldable, and a flexible display.

According to an embodiment, the flexible display may be disposed on two or more housings and may be bent according to the rotational state of the housings. One side of each of the two or more housings may be connected to the hinge, and the two or more housings may rotate about the hinge.

According to an embodiment, the electronic device (e.g., 101 of FIG. 1A) may be formed in various forms according to two or more housing structures and a flexible display provided in the electronic device (e.g., 101 of FIG. 1A) and a rotational state of the housing structures. For example, as illustrated in FIG. 4A, the various forms may include a form (half fold ((c) ofFIG. 4A)) in which two areas are formed in the electronic device (e.g., 101 of FIG. 1A) (e.g., flexible display), a form (e.g., tri fold ((a) of FIG. 4A)) in which three areas are formed in the electronic device (e.g., 101 of FIG. 1A) (e.g., flexible display), Z fold ((b) of FIG. 4A), single open gate fold ((f) of FIG. 4A), a form (e.g., double parallel reverse fold ((d) of FIG. 4A)) in which four areas are formed in the electronic device (e.g., 101 of FIG. 1A) (e.g., flexible display), double parallel fold ((e) of FIG. 4A), double gate fold ((g) ofFIG. 4A), roll fold ((h) of FIG. 4A), accordion fold ((i) ofFIG. 4A), half fold then half fold ((j) of FIG. 4A), and a form (e.g., half fold then tri fold ((k) of FIG. 4A)) in which more areas than those mentioned above are formed in the electronic device (e.g., 101 of FIG. 1A) (e.g., flexible display). The electronic device (e.g., 101 of FIG. 1A) may include housing structures rotatably connected with each other and a flexible display. The housing structures may be rotated into a corresponding form. According to an embodiment, in an electronic device (e.g., 101 of FIG. 1A) including at least two or more housings and at least two or more displays respectively disposed on the housings, the displays of the electronic device (e.g., 101 of FIG. 1A) may form different angles depending on the rotational states of the housings.

Hereinafter, an electronic device (e.g., 101 of FIG. 1A) and a method for operating the same are described by taking an electronic device (e.g., 101 of FIG. 1A) including two housings and a flexible display as an example. However, the operation of deforming and displaying the content of the electronic device (e.g., 101 of FIG. 1A) may also apply to an electronic device (e.g., 101 of FIG. 1A) including three or more housings and a flexible display. Accordingly, the deformed content displayed by the electronic device (e.g., 101 of FIG. 1A) including three or more housings and a flexible display may be perceived one virtual plane by the user.

Meanwhile, although it is described that one display is disposed on a plurality of housings in the electronic device (e.g., 101 of FIG. 1A), different displays may be provided for each of the plurality of housings. Accordingly, the electronic device (e.g., 101 of FIG. 1A) and operation method thereof according to various embodiments, described below, may also be applied to electronic devices (e.g., 101 of FIG. 1A) including at least two or more housings and at least two or more displays disposed on the housings, respectively. For example, the following description of the area of the flexible display corresponding to one housing may be applied to a description of a display corresponding to one housing among the plurality of displays provided in the electronic device (e.g., 101 of FIG. 1A).

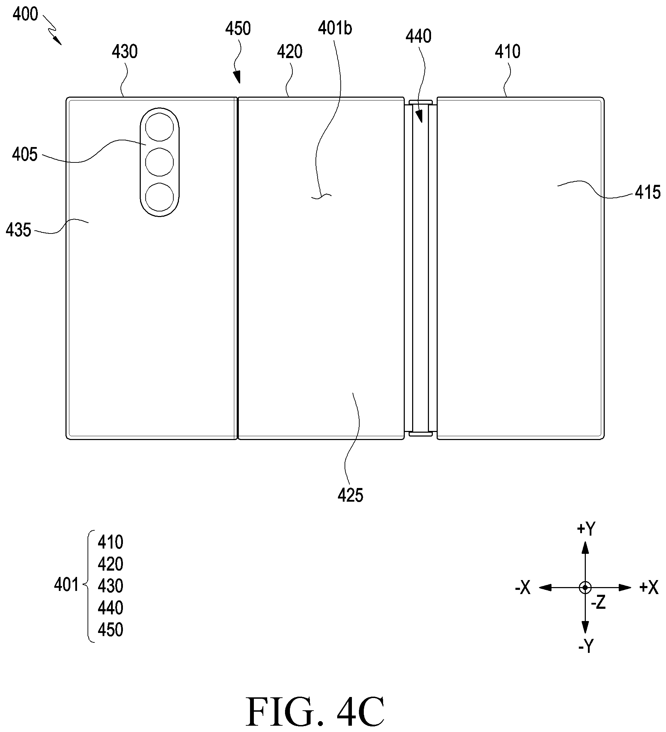

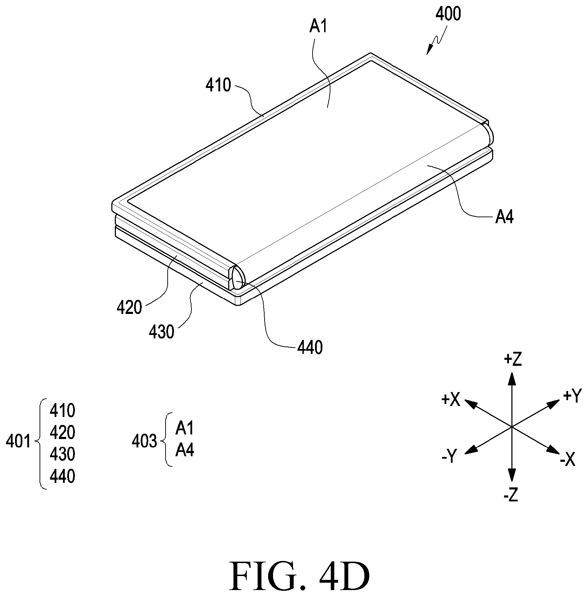

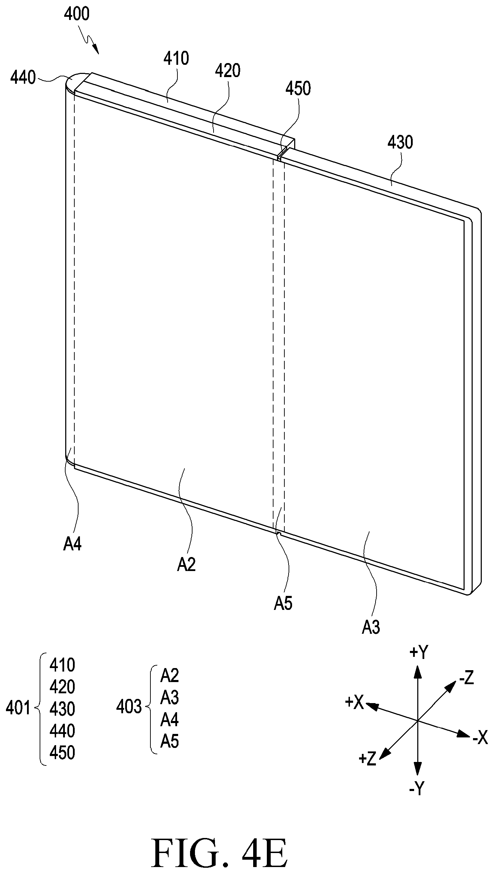

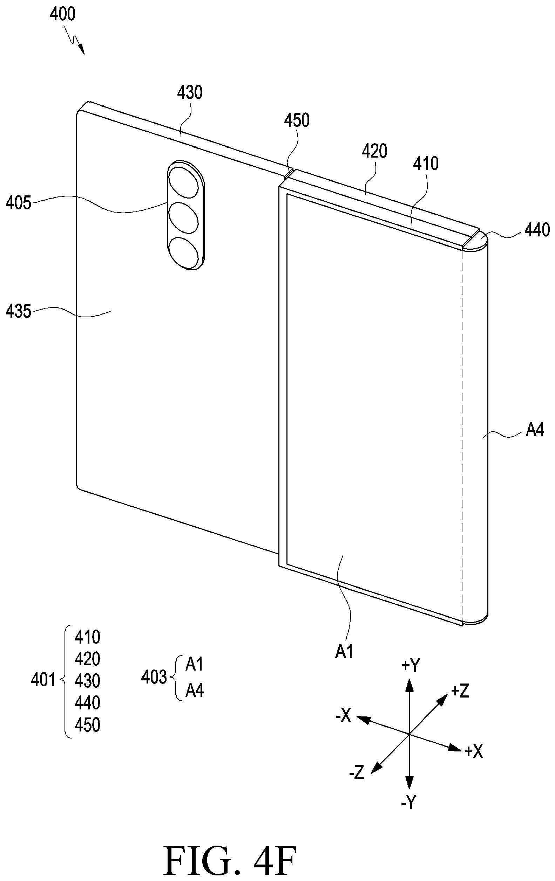

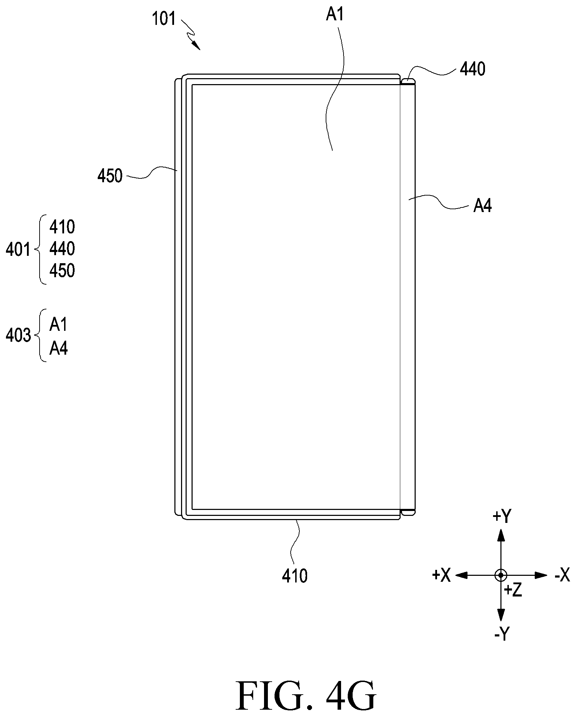

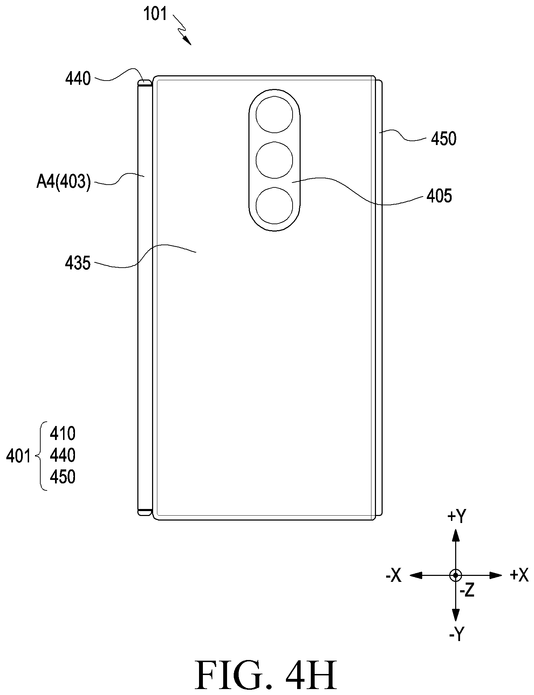

FIG. 4B is a front view illustrating an unfolded state of a third type of electronic device according to an embodiment. FIG. 4C is a rear view illustrating an unfolded state of a third type of electronic device according to an embodiment. FIG. 4D is a perspective view illustrating a folded state of a third type of electronic device according to an embodiment. FIG. 4E is a front perspective view illustrating a single-stage folded state of a third type of electronic device according to an embodiment. FIG. 4F is a rear perspective view illustrating a single-stage folded state of a third type of electronic device according to an embodiment. FIG. 4G is a front view illustrating a folded state of a third type of electronic device according to an embodiment. FIG. 4H is a rear view illustrating a folded state of a third type of electronic device according to an embodiment.

Referring to FIGS. 4B to 4H, the structure of the third type of electronic device 400 may be described. The electronic device 400, as an example of the electronic device 101 shown in FIG. 1, may be a foldable or bendable electronic device 400. The configuration of the electronic device 400 of FIGS. 4B to 4H may be identical in whole or part to the configuration of the electronic device 101 of FIG. 1.

Hereinafter, for convenience of description, a spatial coordinate system (or Cartesian coordinate system) including the X axis, Y axis, or Z axis may be illustrated in the drawings.

According to an embodiment, an electronic device 400 may include a housing 401 and a flexible display 403 (e.g., the display module 160 of FIG. 1) disposed in a space formed by the housing 401.

According to an embodiment, the housing 401 of the electronic device 400 may be defined and/or referred to as a foldable housing 401 or a deformable housing 401.

According to an embodiment, in the state in which the electronic device 400 is unfolded (e.g., FIG. 4B), the surface on which the flexible display 403 is disposed (or the surface where the flexible display 403 is viewed from the outside of the electronic device 400) may be defined as a front surface 401a of the electronic device 400. In the unfolded state (e.g., FIG. 4C) of the electronic device 400, the opposite surface of the front surface 401a may be defined as a rear surface 401b of the electronic device 400. Further, the surface surrounding the space between the front surface 401a and the rear surface 401b may be defined as a side surface of the electronic device 400.

According to an embodiment, the housing 401 of the electronic device 400 may include a first housing 410, a second housing 420, and a third housing 430. The electronic device 400 may include a first hinge 440 (e.g., a first hinge structure) and a second hinge 450 (e.g., a second hinge structure). The first hinge 440 may be defined and/or referred to as a first hinge assembly. The second hinge 450 may be defined and/or referred to as a second hinge assembly.

According to an embodiment, the first hinge 440 may be connected to the first housing 410 or the second housing 420. The second housing 420 may be rotatably connected to the first housing 410 using the first hinge 440. According to an embodiment, the second hinge 450 may be connected to the second housing 420 or the third housing 430. The third housing 430 may be rotatably connected to the second housing 420 using the second hinge 450.

According to an embodiment, the first housing 410 may be connected to the first hinge 440. The first housing 410 may include a first front surface facing the first direction (e.g., the +Z direction of FIG. 4B), and a first rear surface facing the second direction (e.g., the -Z direction of FIG. 4C) opposite to the first direction. The second housing 420 may be connected to the first hinge 440. The second housing 420 may include a second front surface facing the first direction (e.g., the +Z direction of FIG. 4B), and a second rear surface facing the second direction (e.g., the -Z direction of FIG. 4C) opposite to the first direction.

According to an embodiment, the first housing 410 may rotate with respect to the second housing 420 around the first hinge 440. The first housing 410 and the second housing 420 may be provided in a folded state (e.g., FIG. 4D, FIG. 4E, and FIG. 4F) or an unfolded state (e.g., FIG. 4B and FIG. 4C). When the first housing 410 and the second housing 420 are in the folded state, the first rear surface of the first housing 410 may face the second rear surface of the second housing 420. When the first housing 410 and the second housing 420 are in the folded state, the first front surface of the first housing 410 may face the direction opposite to the second front surface of the second housing 420. When the first housing 410 and the second housing 420 are in the unfolded state, the first front surface of the first housing 410 may face the same direction as the second front surface of the second housing 420. When the first housing 410 and the second housing 420 are in the unfolded state, the first rear surface of the first housing 410 may face the same direction as the second rear surface of the second housing 420.

According to an embodiment, the second housing 420 may be connected to the second hinge 450. The third housing 430 may be connected to the second hinge 450. The third housing 430 may include a third front surface facing the first direction (e.g., the +Z direction of FIG. 4B), and a third rear surface facing the second direction (e.g., the -Z direction of FIG. 4C) opposite to the first direction.

According to an embodiment, the second housing 420 may rotate with respect to the third housing 430 around the second hinge 450. The second housing 420 and the third housing 430 may be provided in the folded state (e.g., FIG. 4D) or the unfolded state (e.g., FIG. 4B, FIG. 4C, FIG. 4E, and FIG. 4F). When the second housing 420 and the third housing 430 are in the folded state, the second front surface of the second housing 420 may face the third front surface of the third housing 430. When the second housing 420 and the third housing 430 are in the folded state, the second rear surface of the second housing 420 may face the direction opposite to the third rear surface of the third housing 430. When the second housing 420 and the third housing 430 are in the unfolded state, the second front surface of the second housing 420 may face the same direction as the third front surface of the third housing 430. When the second housing 420 and the third housing 430 are in the unfolded state, the second rear surface of the second housing 420 may face the same direction as the third rear surface of the third housing 430.

According to an embodiment, the fully folded state of the electronic device 400 may be defined as a state in which the first housing 410 and the second housing 420 are in the folded state while the second housing 420 and the third housing 430 are in the folded state. According to an embodiment, the fully unfolded state of the electronic device 400 may be defined as a state in which the first housing 410 and the second housing 420 are in the unfolded state while the second housing 420 and the third housing 430 are in the unfolded state.

According to an embodiment, in the fully folded state of the first housing 410 and the second housing 420, the first rear surface and the second rear surface may face each other. According to an embodiment, the first housing 410 and the second housing 420 are disposed on two opposite sides of the first hinge 440 and may have a shape that is generally symmetrical with respect to the first hinge 440. However, the first housing 410 and the second housing 420 do not necessarily have the symmetrical shapes. The angle or distance between the first housing 410 and the second housing 420 may vary depending on whether the state of the first housing 410 and the second housing 420 is the unfolded state, the folded state, or an intermediate state, i.e., a partially unfolded (or partially folded).

According to an embodiment, in the fully folded state of the second housing 420 and the third housing 430, the second front surface and the third front surface may face each other. According to an embodiment, the second housing 420 and the third housing 430 are disposed on two opposite sides of the second hinge 450 and may have a shape that is generally symmetrical with respect to the second hinge 450. However, the second housing 420 and the third housing 430 do not necessarily have the symmetrical shapes. The angle or distance between the second housing 420 and the third housing 430 may vary depending on whether the state of the second housing 420 and the third housing 430 is the unfolded state, the folded state, or an intermediate state, i.e., a partially unfolded (or partially folded).

According to an embodiment, the first housing 410 may include a first rear cover 415. The first rear cover 415 may be disposed on one side of the first hinge 440 on the rear surface 401b of the electronic device 400, and may have, e.g., a substantially rectangular edge. The edge of the first rear cover 415 may be surrounded by side surfaces of the first housing 410.

According to an embodiment, the second housing 420 may include a second rear cover 425. The second rear cover 425 may be disposed on the other side of the first hinge 440 or one side of the second hinge 450 on the rear surface 401b of the electronic device 400, and may have, e.g., a substantially rectangular edge. The edge of the second rear cover 425 may be surrounded by side surfaces of the second housing 420.

According to an embodiment, the third housing 430 may include a third rear cover 435. The third rear cover 435 may be disposed on the other side of the second hinge 450 on the rear surface 401b of the electronic device 400, and may have, e.g., a substantially rectangular edge. The edge of the third rear cover 435 may be surrounded by side surfaces of the third housing 430.

According to an embodiment, the first rear cover 415 and the second rear cover 425 may have a substantially symmetrical shape with respect to the first hinge 440. The second rear cover 425 and the third rear cover 435 may have a substantially symmetrical shape with respect to the second hinge 450. However, the first rear cover 415, the second rear cover 425, and the third rear cover 435 do not necessarily have a mutually symmetrical shape, and in an embodiment, the electronic device 400 may include a first rear cover 415, a second rear cover 425, and a third rear cover 435 having various shapes. In an embodiment, the first rear cover 415 may be integrally formed with the first housing 410. The second rear cover 425 may be integrally formed with the second housing 420. The third rear cover 435 may be integrally formed with the third structure 430.

According to an embodiment, the first rear cover 415, the second rear cover 425, the third rear cover 435, the first housing 410, the second housing 420, and the third housing 430 may form a space in which various components (e.g., a printed circuit board or a battery) of the electronic device 400 may be disposed. According to an embodiment, one or more components may be disposed or visually exposed on the rear surface 401b of the electronic device 400. One or more components or sensors (e.g., the camera 405) may be visually exposed through the third rear cover 435.

According to an embodiment, the flexible display 403 may mean a display in which at least a partial area of the flexible display 403 may be transformed into a flat or curved surface. For example, flexible display 403 may be configured to be at least partially folded or at least partially unfolded.

According to an embodiment, the flexible display 403 includes multiple display areas: a first display area A1, a second display area A2, and a third display area A3. It also includes, a first folding area A4, and/or a second folding area A5. The first display area A1 is disposed on one side of the first folding area A4, and the second display area A2 may be disposed on the other side of the first folding area A4. The second display area A2 may be disposed on one side of the second folding area A5, and the third display area A3 may be disposed on the other side of the second folding area A5.

According to an embodiment, the first display area A1 may be disposed on the first housing 410. The second display area 2 may be disposed on the second housing 420. The third display area 3 may be disposed on the third housing 430. According to an embodiment, the first folding area A4 may connect the first display area A1 and the second display area A2, and may be disposed on the first hinge 440. The second folding area A5 may connect the second display area A2 and the third display area A3, and may be disposed on the second hinge 450. The area division of the flexible display 403 shown in FIG. 4B is exemplary, and the display may be divided into a plurality of areas (e.g., six or more or three areas) according to the structure or function.

According to an embodiment, the first display area A1 and the second display area A2 may have an overall symmetrical shape with respect to the first folding area A4. The second display area A2 and the third display area A3 may have an overall symmetrical shape with respect to the second folding area A5. According to an embodiment, the first display area A1 may be disposed on a portion of the first folding area A4. According to an embodiment, the first display area A2 may be disposed on a portion of the first folding area A4. According to an embodiment, the first display area A1 may contact the second display area A2. According to an embodiment, the second display area A2 may include a portion of the second folding area A5. According to an embodiment, the third display area A3 may include a portion of the second folding area A5. According to an embodiment, the second display area A2 may contact the third display area A3.

According to an embodiment, in the fully folded state (e.g., FIG. 4D) of the state of the electronic device 400, the first folding area A4 positioned on the first hinge 440 may be exposed to the outside of the electronic device 400, and the second folding area A5 positioned on the second hinge 450 may be disposed inside the electronic device 400 and may not be exposed to the outside. In an embodiment, the first hinge 440 may be defined and/or referred to as an out-folding hinge exposing a portion of the flexible display 403 to the outside of the electronic device 400 in the folded state. The second hinge 450 may be defined and/or referred to as an in-folding hinge that does not expose a portion of the flexible display 403 to the outside in the folded state. In an embodiment, the first hinge 440 may be provided as an in-folding hinge, and the second hinge 450 may be provided as an out-folding hinge.

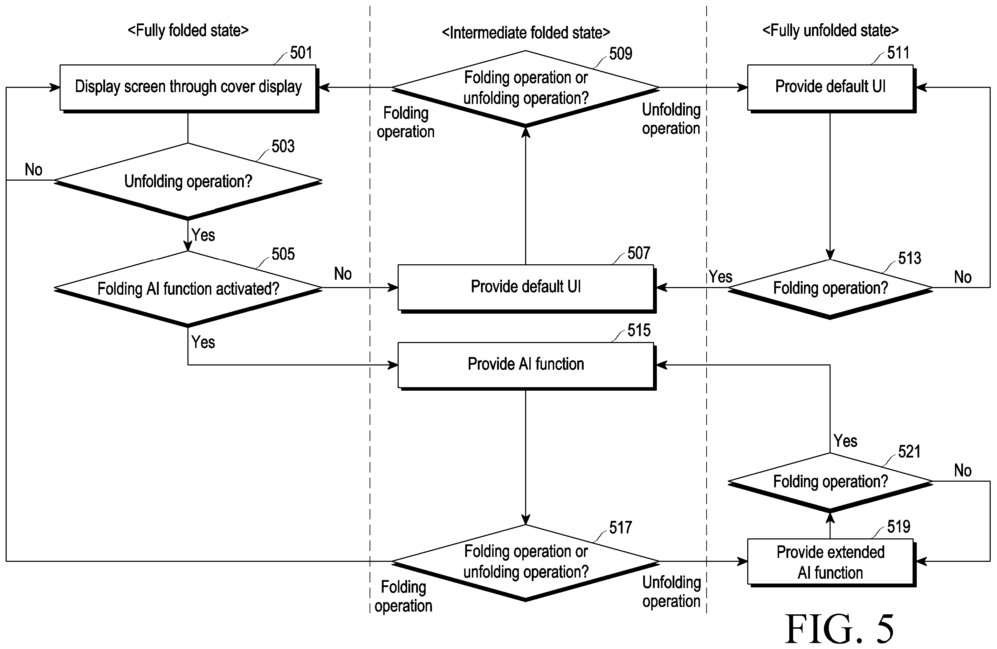

Operations of the electronic device (e.g., the electronic device 101 of FIG. 1A, the electronic device 200 of FIG. 2A, the electronic device 300 of FIG. 3A, the electronic device (e.g., 101 of FIG. 1A) of FIG. 4A, or the electronic device 400 of FIG. 4B) may be described in detail with reference to the above-described embodiments (e.g., the embodiments of FIG. 1A, FIG. 1B, FIG. 2A, FIG. 2B, FIG. 2C, FIG. 2D, FIG. 2E, FIG. 3A, FIG. 3B, FIG. 3C,FIG. 4A, and FIG. 4B) and the following embodiments (e.g., the embodiments of FIGS. 5 to 16). Although each of the embodiments is disclosed in separate drawings and separate paragraphs, this is only for convenience of description, and at least some of the above-described embodiments and at least some of the following embodiments may be applied together. At least some of the above-described embodiments and at least some of the following embodiments may be omitted.

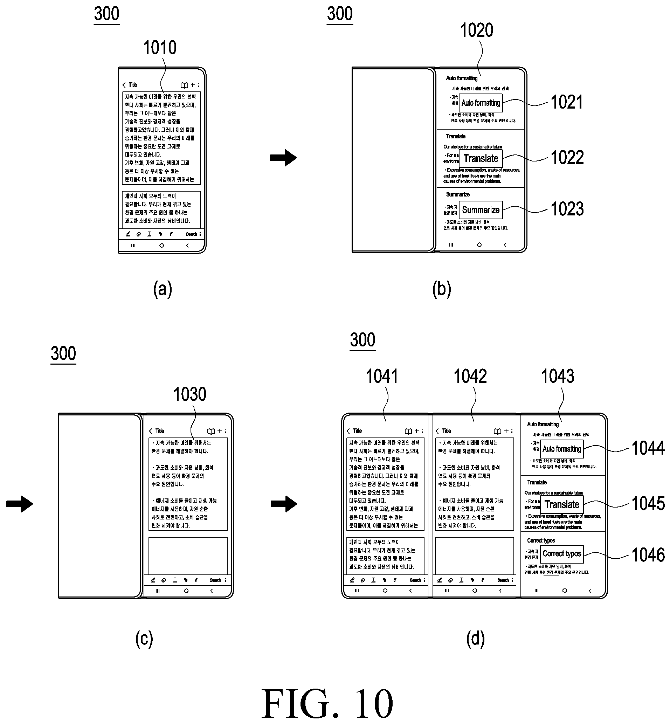

In the following embodiments, the electronic device 200 of FIG. 2A, the electronic device 300 of FIG. 3A, the electronic device 101 ofFIG. 4A, or the electronic device 400 of FIG. 4B may be the electronic device 101 of FIG. 1A. In the following embodiments, the components of the electronic device (e.g., the electronic device 200 of FIG. 2A, the electronic device 300 of FIG. 3A, the electronic device 101 ofFIG. 4A, or the electronic device 400 of FIG. 4B) may be understood with reference to FIGS. 2A, 2B, 2C, 2D, and 2E, understood with reference to FIGS. 3A, 3B, and 3C, understood with reference to FIG. 4A, or understood with reference to FIGS. 4B, 4C, 4D, 4E, 4F, 4G, and 4H. The electronic device 200 of FIG. 2A, the electronic device 300 of FIG. 3A, the electronic device 101 of FIG. 4A or the electronic device 400 of FIG. 4B are only different in the folding method, and the following embodiments may be applied to the electronic device 200 of FIG. 2A, the electronic device 300 of FIG. 3A, the electronic device (e.g., 101 of FIG. 1) of FIG. 4A, or the electronic device 400 of FIG. 4B. Therefore, hereinafter, the "electronic device 101" may be the electronic device 101 of FIG. 1A, the electronic device 200 of FIG. 2A, the electronic device 300 of FIG. 3A, the electronic devices (e.g., 101 of FIG. 1) of FIG. 4A, or the electronic device 400 of FIG. 4B. For example, the electronic device 101 (e.g., 200 of FIG. 2A, 30 of FIG. 3A, or 400 of FIG. 4B) may include a housing (e.g., 201 of FIG. 2A, 301 of FIG. 3A, or 401 of FIG. 4B) that includes a first housing (e.g., 230 of FIG. 2A, 320 of FIG. 3A, or 410 of FIG. 4B), a second housing (e.g., 210 of FIG. 2A, 310 of FIG. 2A, or 420 of FIG. 4B), and a third housing (e.g., 220 of FIG. 2A, 330 of FIG. 3A, or 430 of FIG. 4B). For example, the electronic device 101 (e.g., 200 of FIG. 2A, 300 of FIG. 3A, or 400 of FIG. 4B) may include a first hinge (e.g., 280 of FIG. 2B, 370 of FIG. 3A, or 440 of FIG. 4B) (e.g., a first hinge structure) configured to rotatably connect the first housing (e.g., 230 of FIG. 2A, 320 of FIG. 3A, or 410 of FIG. 4B) and the second housing (e.g., 210 of FIG. 2A, 310 of FIG. 2A, or 420 of FIG. 4B). For example, the electronic device 101 (e.g., 200 of FIG. 2A, 300 of FIG. 3A, or 400 of FIG. 4B) may include a second hinge (e.g., 270 of FIG. 2B, 80 of FIG. 3A, or 450 of FIG. 4B) (e.g., a second hinge structure) configured to rotatably connect the second housing (e.g., 210 of FIG. 2A, 10 of FIG. 2A, or 420 of FIG. 4B) and the third housing (e.g., 220 of FIG. 2A, 30 of FIG. 3A, or 430 of FIG. 4B). For example, the electronic device 101 (e.g., 200 of FIG. 2A, 300 of FIG. 3A, or 400 of FIG. 4B) may include a flexible display 162 (e.g., 202 of FIG. 2A, 302 of FIG. 3A, or FIG. 4Aof FIG. 4B) including a first display area (e.g., 202c of FIG. 2A, FIG. 4Aof FIG. 3A, or A1 of FIG. 4B) corresponding to the first housing (e.g., 230 of FIG. 2A, FIG. 4A of FIG. 3A, or 410 of FIG. 4B), a second display area (e.g., 202a of FIG. 2A,FIG. 4A of FIG. 3A, or A2 of FIG. 4B) corresponding to the second housing (e.g., 210 of FIG. 2A, FIG. 4A of FIG. 2A, oFIG. 4Aof FIG. 4B), and a third display area (e.g., 202b of FIG. 2A, 302c of FIG. 3A, or A3 of FIG. 4B) corresponding to the third housing (e.g., 220 of FIG. 2A, 3\30 of FIG. 3A, or 430 of FIG 4B). For example, the electronic device 101 (e.g., 200 of FIG. 2A, 300 of FIG. 3A, or 400 of FIG. 4B) may include a cover display 161 (e.g., 203 of FIG. 2B or 303 of FIG. 3B) configured to face a direction opposite to a direction in which the flexible display 162 (e.g., 202 of FIG. 2A, 302 of FIG. 3A, or 03 of FIG. 4B) faces in the unfolded state of the electronic device 101 (e.g., 200 of FIG. 2A, 300 of FIG. 3A, or 400 of FIG. 4B).

According to an embodiment, the folding state of the electronic device 101 is described as follows.

According to an embodiment, the folding state of the electronic device 101 may include a fully folded state, an intermediate folded state (e.g., a partially folded state), and a fully unfolded state. However, this is merely an example, and there is no limitation on the folding state of the electronic device 101. The intermediate folded state may be a partially folded state. According to an embodiment, the electronic device 101 may identify the folding state of the electronic device 101 by identifying a first folding angle (e.g., a first folding state) between the first housing (e.g., 230 of FIG. 2A, 320 of FIG. 3A, or 410 of FIG. 4B) and the second housing (e.g., 210 of FIG. 2A, 310 of FIG. 2A, or 420 of FIG. 4B), corresponding to the first hinge (e.g., 280 of FIG. 2B, 370 of FIG. 3A, or 440 of FIG. 4B) (e.g., a first hinge structure) and a second folding angle (e.g., a second folding state) between the second housing (e.g., 210 of FIG. 2A, 310 of FIG. 2A, or 420 of FIG. 4B) and the third housing (e.g., 220 of FIG. 2A, 330 of FIG. 3A, or 430 of FIG. 4B), corresponding to the second hinge (e.g., 270 of FIG. 2B, 80 of FIG. 3A, or 450 of FIG. 4B) (e.g., a second hinge structure), using at least one sensor (e.g., the sensor module 176 of FIG. 1).

According to an embodiment, the fully folded state of the electronic device 101 may be a fully folded state of the electronic device 101 according to the rotation of the hinge (e.g., 270 and 280 of FIG. 2B, 370 and 380 of FIG. 3B, the hinge of FIG. 4A, or 440 and 450 of FIG. 4B) of the electronic device 101. For example, the fully folded state may be a fully folded state of the electronic device 101 in which the first folding angle (e.g., a first folding state) and the second folding angle (e.g., a second folding state) are included in a folded angle range. For example, the folded angle range may be an angle range that includes about 0 degrees. For example, the folded angle range may be an angle range of about -5 degrees to about 10 degrees. There is no limit to the folded angle range. For example, the fully folded state may be a state (e.g., the state of FIG. 2C, the first (left) state of FIG. 3C, or the state of FIG. 4D) in which, among the plurality of areas of the flexible display 162, an area (e.g., the first foldable area (e.g., 202e of FIG. 2A, 302d of FIG. 3A, or A4 of FIG. 4B) corresponding to the first hinge (e.g., 280 of FIG. 2B, 370 of FIG. 3A, or 440 of FIG. 4B) (e.g., a first hinge structure) of the electronic device 101 and an area (e.g., the second foldable area (e.g., 202d of FIG. 2A, 32e of FIG. 3A, or A5 of FIG. 4B) corresponding to the second hinge (e.g., 270 of FIG. 2B, 380 of FIG. 3A, or 450 of FIG. 4B) (e.g., a second hinge structure) are folded. For example, the fully folded state of the electronic device 200, 300 may be a state in which none of the first display area (e.g., 202c of FIG. 2A, 302b of FIG. 3A), the second display area (e.g., 202a of FIG. 2A, 302a of FIG. 3A), and the third display area (e.g., 202b of FIG. 2A, 302c of FIG. 3A) are visually exposed.

According to an embodiment, the intermediate folded state (e.g., a partially folded state) may be a single-side open state (e.g., a half open state, a half folded state, or a partially folded state) of the electronic device 101 according to the rotation of the hinge (e.g., 270 and 280 of FIG. 2B, 30 and 380 of FIG. 3B, the hinge of FIG. 4A, or 440 and 450 of FIG. 4B) of the electronic device 101. For example, the intermediate folded state (e.g., a partially folded state) may be an intermediate folded state (or a partially folded state) of the electronic device 101, in which one of the first folding angle (e.g., the first folding state) or the second folding angle (e.g., the second folding state) is included in the folded angle range, and the other of the first folding angle (e.g., the first folding state) or the second folding angle (e.g., the second folding state) is included in the unfolded angle range. For example, the unfolded angle range may be an angle range that includes about 180 degrees. For example, the unfolded angle range may be an angle range of about 170 degrees to about 185 degrees. There is no limit to the unfolded angle range. For example, the intermediate folded state (e.g., a partially folded state) may be a state (e.g., the state of FIG. 2C, the first (left) state of FIG. 3C, or the state of FIG. 4D) in which, among the plurality of areas of the flexible display 162, one of an area (e.g., the first foldable area (e.g., 202e of FIG. 2A, 302d of FIG. 3A, or A4 of FIG. 4B) corresponding to the first hinge (e.g., 280 of FIG. 2B, 370 of FIG. 3A, or 40 of FIG. 4B) (e.g., a first hinge structure) of the electronic device 101 or an area (e.g., the second foldable area (e.g., 202d of FIG. 2A, 302e of FIG. 3A, or A5 of FIG. 4B) corresponding to the second hinge (e.g., 270 of FIG. 2B, 380 of FIG. 3A, or 450 of FIG. 4B) (e.g., a second hinge structure) is folded (e.g., the state of FIG. 2D, the second (middle) state of FIG. 3C, or the state of FIG. 4E (or FIG. 4F)). For example, the intermediate folded state (e.g., a partially folded state) of the electronic device 200, 300 may be a state in which one of the first display area (e.g., 202c of FIG. 2A, 302b of FIG. 3A), the second display area (e.g., 202a of FIG. 2A, 302a of FIG. 3A), or the third display area (e.g., 202b of FIG. 2A, 302c of FIG. 3A) is visually exposed.

According to an embodiment, the fully unfolded state may be a fully unfolded state of the electronic device 101 according to the rotation of the hinge (e.g., 270 and 280 of FIG. 2B, 370 and 380 of FIG. 3B, the hinge of FIG. 4A, or 440 and 450 of FIG. 4B) of the electronic device 101. For example, the fully unfolded state may be a fully unfolded state of the electronic device 101 in which the first folding angle (e.g., a first folding state) and the second folding angle (e.g., a second folding state) are included in an unfolded angle range. For example, the fully unfolded state may be a state (e.g., the state of FIG. 2A, the state of FIG. 3A, or the state of FIG. 4B (or FIG. 4C)) in which, among the plurality of areas of the flexible display 162, an area (e.g., the first foldable area (e.g., 202e of FIG. 2A, 302d of FIG. 3A, or A4 of FIG. 4B) corresponding to the first hinge (e.g., 280 of FIG. 2B, 370 of FIG. 3A, or 440 of FIG. 4B) (e.g., a first hinge structure) of the electronic device 101 and an area (e.g., the second foldable area (e.g., 202d of FIG. 2A, 302e of FIG. 3A, or A5 of FIG. 4B) corresponding to the second hinge (e.g., 270 of FIG. 2B, 30 of FIG. 3A, or 450 of FIG. 4B) (e.g., a second hinge structure) are unfolded. For example, the fully unfolded state of the electronic device 200, 300 may be a state in which all of the first display area (e.g., 202c of FIG. 2A, 302b of FIG. 3A), the second display area (e.g., 202a of FIG. 2A, 32a of FIG. 3A), and the third display area (e.g., 202b of FIG. 2A, 302c of FIG. 3A) are visually exposed.

In the disclosure, that the electronic device (e.g., the electronic device 101 of FIG. 1A, the electronic device 200 of FIG. 2A, the electronic device 300 of FIG. 3A, or the electronic devices (e.g., 101 or the electronic device 400 of FIG. 4B) of FIG. 4A) performs a specific operation may mean that the processor 120 such as various pieces of hardware, e.g., micro controlling unit (MCU), field programmable gate array (FPGA), application specific integrated circuit (ASIC), microprocessor, or application processor (AP) included in the electronic device (e.g., the electronic device 101 of FIG. 1A, the electronic device 200 of FIG. 2A, the electronic device 300 of FIG. 3A, or the electronic devices (e.g., 101 or the electronic device 400 of FIG. 4B) of FIG. 4A) performs the specific operation. According to an embodiment, the processor 120 may include processing circuitry. That the electronic device (e.g., the electronic device 101 of FIG. 1A, the electronic device 200 of FIG. 2A, the electronic device 300 of FIG. 3A, or the electronic devices (e.g., 101 or the electronic device 400 of FIG. 4B) of FIG. 4A) perform a specific operation may mean that the processor 120 controls other hardware to perform the specific operation. That the electronic device (e.g., the electronic device 101 of FIG. 1A, the electronic device 200 of FIG. 2A, the electronic device 300 of FIG. 3A, or the electronic devices (e.g., 101 or the electronic device 400 of FIG. 4B) of FIG. 4A) performs a specific operation may mean that at least one instruction for performing the specific operation, stored in storage circuitry (e.g., the memory 130) of the electronic device (e.g., the electronic device 101 of FIG. 1A, the electronic device 200 of FIG. 2A, the electronic device 300 of FIG. 3A, or the electronic devices (e.g., 101 or the electronic device 400 of FIG. 4B) of FIG. A) is executed to cause the processor 120 or other hardware to perform the specific operation. The at least one instruction stored in the electronic device (e.g., the electronic device 101 of FIG. 1A, the electronic device 200 of FIG. 2A, the electronic device 300 of FIG. 3A, or the electronic devices (e.g., 101 or the electronic device 400 of FIG. 4B) of FIG. 4A) may, when executed by the processor 120 individually or collectively, cause the electronic device (e.g., the electronic device 101 of FIG. 1A, the electronic device 200 of FIG. 2A, the electronic device 300 of FIG. 3A, or the electronic devices (e.g., 101 or the electronic device 400 of FIG. 4B) of FIG. 4A) to perform at least one operation.

The artificial intelligence related function according to the disclosure may be operated through the processor 120 and the memory 130. The processor 120 may be composed of one or more processors 120. In this case, the one or more processors 120 may be a general-purpose processor such as a CPU, an AP, a digital signal processor (DSP), a graphics-dedicated processor such as a GPU or a vision processing unit (VPU), or an artificial intelligence-dedicated processor such as an NPU. The one or more processors 120 control to process input data according to predefined operation rules or artificial intelligence models stored in the memory 130. Alternatively, when the one or more processors 120 are AI-dedicated processors, the AI-dedicated processors may be designed with a hardware structure specialized for processing a specific AI model.

The predefined operation rules or artificial intelligence models are characterized by being created by training. Here, "created by training" means that a predefined operation rule or artificial intelligence model configured to achieve a desired feature (or goal) is created by training an artificial intelligence model with multiple pieces of training data and a training algorithm. The artificial intelligence model may include a plurality of neural network layers. Each of the plurality of neural network layers includes a plurality of weight values and performs neural network computation by computation between the result of computation by a previous layer and the plurality of weight values. Such training may be performed by the device itself on which the artificial intelligence according to the disclosure is performed, or may be performed through a separate server (e.g., the server 108 of FIG. 1) and/or system. Learning algorithms may include, but are not limited to, e.g., supervised learning, unsupervised learning, semi-supervised learning, or reinforcement learning.

The artificial intelligence model may include a plurality of neural network layers. Each of the plurality of neural network layers includes a plurality of weight values and performs neural network computation by computation between the result of computation by a previous layer and the plurality of weight values. The plurality of weights possessed by the plurality of neural network layers may be optimized by the training results of the artificial intelligence model. For example, the plurality of weights may be updated so that the loss value or cost value obtained from the artificial intelligence model is reduced or minimized during the learning process. The artificial neural network may include a deep neural network (DNN), such as a convolutional neural network (CNN), a recurrent neural network (RNN), a limited Boltzmann machine (RBM), a deep belief network (DBN), a bidirectional recurrent deep neural network (BRDNN) or deep Q-networks, but is not limited to the above-described examples.

In the operation method for the electronic device 101 according to the disclosure, the electronic device 101 may recognize speech. According to an embodiment, the electronic device 101 may recognize the user's speech by receiving a speech signal, which is an analog signal, through the input module 150 (e.g., a microphone), and interpret the intent of the utterance included in the recognized speech. According to an embodiment, the electronic device 101 may recognize audio included in a video and interpret the intent of the speech included in the recognized audio. The electronic device 101 may convert the speech portion into computer-readable text using an automatic speech recognition (ASR) model. The intent of utterance may be obtained by interpreting the text using a natural language understanding (NLU) model. The ASR model or NLU model may be an artificial intelligence model. The artificial intelligence model may be processed by the processor 120 (e.g., an artificial intelligence-dedicated processor) designed in a hardware structure specified for artificial intelligence model processing. The artificial intelligence model may be created by training. Language understanding is a technique for recognizing and applying/processing human language/text and includes, e.g., natural language processing, machine translation, dialog system, question answering, or speech recognition/synthesis.

In the operation method for the electronic device 101 according to the disclosure, the electronic device 101 may recognize an image. According to an embodiment, the electronic device 101 may obtain output data of an image recognition by using image data as input data of an artificial intelligence model. The artificial intelligence model may be created by training. Visual understanding is a technique for recognizing and processing things as does human vision and includes, e.g., object recognition, object tracking, image retrieval, human recognition, scene recognition, 3D reconstruction/localization, or image enhancement.

Hereinafter, the description of the electronic device 300 of FIG. 3A is an example and, based on the description of the electronic device 300 of FIG. 3A, the operations of the electronic device 200 of FIG. 2A, the electronic device 101 of FIG. 4A, and the electronic device 400 of FIG. 4B may be understood.

FIG. 5 is a flowchart illustrating an operation method of an electronic device according to an embodiment. FIG. 5 may be described with reference to the above-described embodiments and embodiments described below.

Referring to FIG. 5, the operation of identifying a folding angle, the unfolding operation, the folding operation, and the folding AI function may be described.

At least some of the operations of FIG. 5 may be omitted. The order of operations of FIG. 5 may be changed. Operations other than the operations of FIG. 5 may be performed before, while, or after performing the operations of FIG. 5.

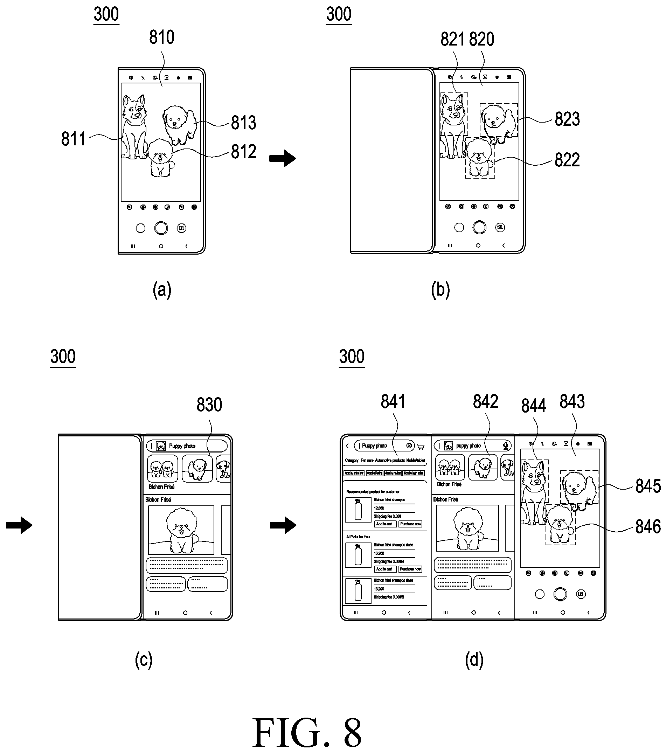

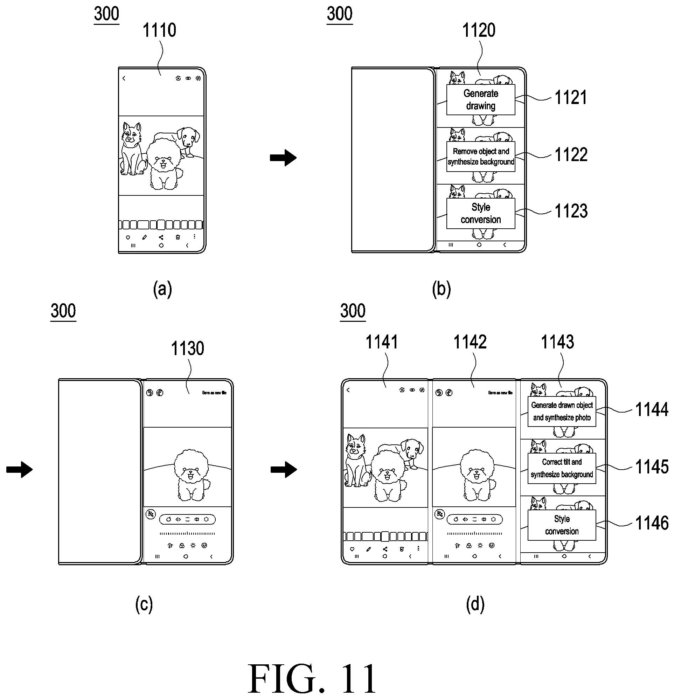

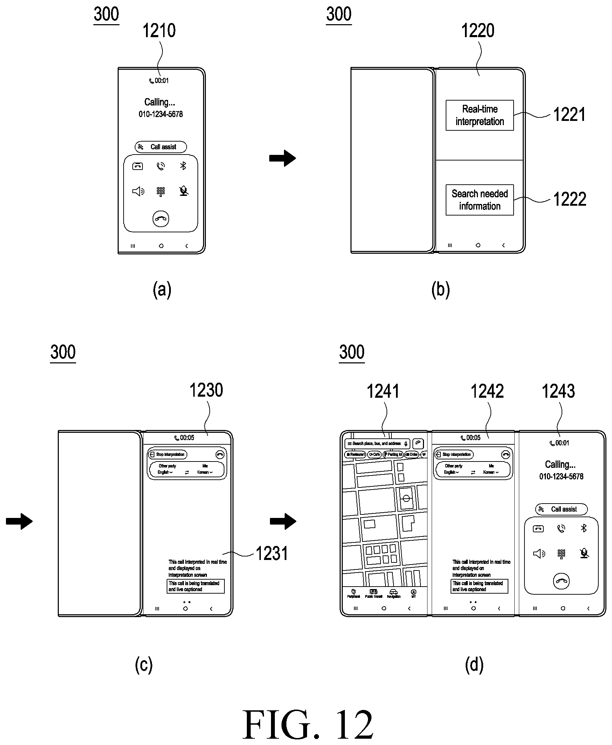

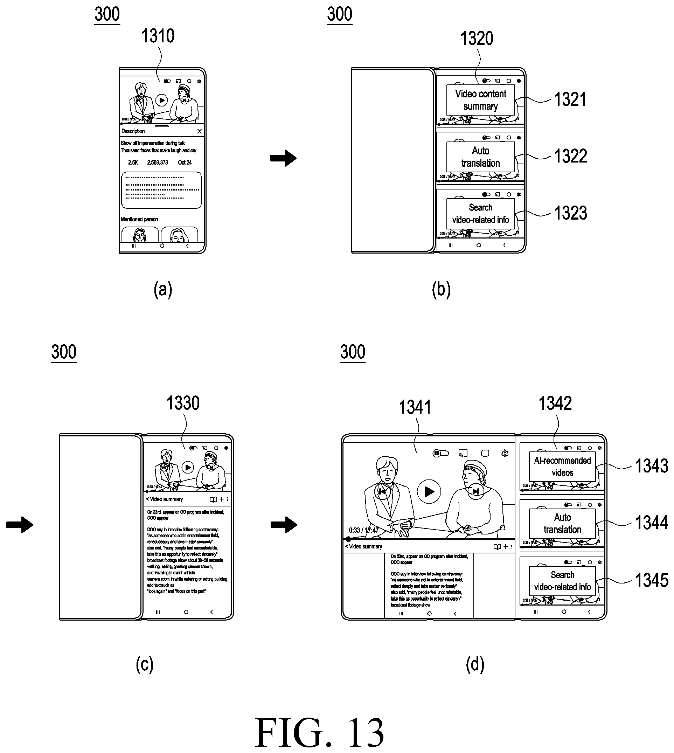

Referring to FIG. 5, in operation 501, according to an embodiment, the electronic device 101 may display a screen through the cover display 161. For example, the electronic device 101, in the fully folded state, the electronic device 101 may display a screen through the cover display 161 (e.g., 203 of FIG. 2C, 303 of FIG. 3C, A1 of 403 of FIG. 4D). According to an embodiment, the electronic device 101 may identify the folding state of the electronic device 101 by identifying a first folding angle (e.g., a first folding state) between the first housing (e.g., 230 of FIG. 2A, 320 of FIG. 3A, or 410 of FIG. 4B) and the second housing (e.g., 210 of FIG. 2A, 30 of FIG. 2A, or 420 of FIG. 4B), corresponding to the first hinge (e.g., 280 of FIG. 2B, 370 of FIG. 3A, or 440 of FIG. 4B) (e.g., a first hinge structure) and a second folding angle (e.g., a second folding state) between the second housing (e.g., 210 of FIG. 2A, 310 of FIG. 2A, or 420 of FIG. 4B) and the third housing (e.g., 220 of FIG. 2A, 330 of FIG. 3A, or 430 of FIG. 4B), corresponding to the second hinge (e.g., 270 of FIG. 2B, 380 of FIG. 3A, or 450 of FIG. 4B) (e.g., a second hinge structure), using at least one sensor (e.g., the sensor module 176 of FIG. 1). The folding state may include a fully folded state, a partially folded state (or half folded state), and a fully unfolded state. According to an embodiment, in the fully folded state, the electronic device 101 may display a first screen of a first application including first content (e.g., a camera application, a note application, a gallery application, a call application, a video application, a social network service (SNS) application, an Internet application, a game application) through the cover display 161 in the fully folded state. For example, in the fully folded state, the electronic device 101 may display the first screen of the first application (e.g., a camera application, a note application, a gallery application, a call application, a video application, a social network service (SNS) application, an Internet application, a game application) through the cover display 161 in the fully folded state. Content displayed on the screen (e.g., information, data, media, text, image, video, object, layout) may be referred to as content, and there is no limitation on the type of content. For example, an image displayed on the screen of FIG. 8 (e.g., the camera preview screen 810 of FIG. 8(a)), which is described below, or an object (e.g., 811, 812, 813 of FIG. 8(a)) included in the image may be referred to as content. For example, the text displayed on the screen of FIG. 10 (e.g., the note screen 1010 of FIG. 10(a)), which is described below, or the layout including the text may be referred to as content. For example, the screen of FIG. 11 (e.g., the image displayed on the gallery screen 1110 of FIG. 11(a)), which is described below, may be referred to as content. For example, an object displayed on the screen of FIG. 12 (e.g., the call screen 1210 of FIG. 12(a)), which is described below, may be referred to as content. For example, a video displayed on the screen of FIG. 13 (e.g., the video screen 1210 of FIG. 13 (a)), which is described below, or a layout including the image may be referred to as content.

In operation 503, according to an embodiment, the electronic device 101 may identify the unfolding operation. The unfolding operation may include the first unfolding operation and the second unfolding operation. For example, the first unfolding operation may be the unfolding operation from the fully folded state to the partially folded state (e.g., the intermediate folded state). For example, the electronic device 101 may identify the first change (e.g., the first unfolding operation) from the fully folded state to the partially folded state. For example, the second unfolding operation may be the unfolding operation from the partially folded state (e.g., the intermediate folded state) to the fully unfolded state. For example, the electronic device 101 may identify a second change (e.g., the second unfolding operation) from the partially folded state to the fully unfolded state. The folding operation may include the first folding operation and the second folding operation. For example, the first folding operation may be the folding operation from the partially folded state (e.g., the intermediate folded state) to the fully folded state. For example, the electronic device 101 may identify a third change (e.g., the first folding operation) from the partially folded state to the fully folded state. For example, the second folding operation may be the folding operation from the fully unfolded state to the partially folded state (e.g., the intermediate folded state). For example, the electronic device 101 may identify a fourth change (e.g., the second folding operation) from the fully unfolded state to the partially folded state. According to an embodiment, the electronic device 101 may identify the unfolding operation (e.g., the first unfolding operation or the second unfolding operation) or the folding operation (e.g., the first folding operation or the second folding operation) by identifying the first folding angle (e.g., the first folding state) of the first foldable area corresponding to the first hinge (e.g., 280 of FIG. 2B, 370 of FIG. 3A, or 440 of FIG. 4B) (e.g., a first hinge structure) and the second folding angle (e.g., the second folding state) of the second foldable area corresponding to the second hinge (e.g., 270 of FIG. 2B, 30 of FIG. 3A, or 450 of FIG. 4B) (e.g., a second hinge structure), among the plurality of areas of the flexible display 162 using at least one sensor (e.g., the sensor module 176 of FIG. 1). For example, the electronic device 101 may identify the unfolding operation (e.g., the first unfolding operation or the second unfolding operation) or the folding operation (e.g., the first folding operation or the second folding operation) by identifying the first folding angle (e.g., the first folding state) between the first housing (e.g., 230 of FIG. 2A, 320 of FIG. 3A, or 10 of FIG. 4B) and the second housing (e.g., 210 of FIG. 2A, 310 of FIG. 2A, or 420 of FIG. 4B) and the second folding angle (e.g., the second folding state) between the second housing (e.g., 210 of FIG. 2A, 310 of FIG. 2A, or 420 of FIG. 4B) and the third housing (e.g., 220 of FIG. 2A, 330 of FIG. 3A, or 430 of FIG. 4B) using the at least one sensor (e.g., the sensor module 176 of FIG. 1).

For example, in operation 501, the electronic device 101 that was displaying the screen in the fully folded state may identify the unfolding operation (e.g., the first unfolding operation) (e.g., the first change) from the fully folded state to the partially folded state (e.g., the intermediate folded state).

In operation 505, according to an embodiment, the electronic device 101 may identify whether the folding AI function is activated based on identifying the unfolding operation (e.g., the first unfolding operation) from the fully folded state to the partially folded state (e.g., the intermediate folded state). According to an embodiment, the folding AI function may include an operation of executing the AI function based on identifying the unfolding operation as a trigger event. There is no limit to AI functions executed through the folding AI function. For example, the folding AI function may be a function that provides at least one AI function to be applied to the content (e.g., the first content) displayed on the screen (e.g., the first content) among the plurality of AI functions allocated to the application (e.g., the first application) of operation 501 based on identifying the unfolding operation as a trigger event. For example, the folding AI function may be a function of determining at least one AI function based on identifying the first change from the fully folded state to the partially folded state. This is described in detail in operation 515. First, an embodiment to which the folding AI function is not applied (e.g., the embodiment of operations 507 to 513) is described.

In operation 507, according to an embodiment, the electronic device 101 may provide a default user interface (UI) by identifying the unfolding operation (e.g., the first unfolding operation) (e.g., the first change) based on deactivation of the folding AI function. For example, providing the default UI in the partially folded state (e.g., the intermediate folded state) based on the unfolding operation (e.g., the first unfolding operation) may be not displaying a screen. Displaying the screen to which the default UI is applied in the partially folded state (e.g., the intermediate folded state) based on the unfolding operation (e.g., the first unfolding operation) may be understood as not displaying the screen. For example, providing the default UI in the partially folded state (e.g., the intermediate folded state) based on the unfolding operation (e.g., the first unfolding operation) may be displaying the default screen. Displaying the screen to which the default UI is applied in the partially folded state (e.g., the intermediate folded state) based on the unfolding operation (e.g., the first unfolding operation) may be displaying the default screen. A screen that is not a screen to which the folding AI function is applied may be referred to as the default screen. There is no limit to the type of default screen. For example, the default screen may be determined based on a previously displayed screen. For example, the default screen may be determined regardless of a previously displayed screen. For example, the default screen may be a screen to which a function other than the folding AI function is applied. According to an embodiment, the electronic device 101 may provide the default UI to a third display area (e.g., a display area exposed to the outside in the partially folded state (e.g., the intermediate folded state)) (e.g., 202b of FIG. 2D, 302c of FIG. 3C, A1 of 403 of FIG. 4F, or A2 and/or A3 of 403 of FIG. 4E) of the flexible display 162 in the partially folded state (e.g., the intermediate folded state) by identifying the unfolding operation (e.g., the first unfolding operation) based on the deactivation of the folding AI function.

In operation 509, according to an embodiment, the electronic device 101 may identify the folding operation (e.g., the first folding operation) or the unfolding operation (e.g., the second unfolding operation). According to an embodiment, the electronic device 101 may perform operation 501 based on identifying the folding operation (e.g., the first folding operation) after providing the default UI to a third display area (e.g., a display area exposed to the outside in the partially folded state (e.g., the intermediate folded state)) (e.g., 202b of FIG. 2D, 32c of FIG. 3C, A1 of 403 of FIG. 4F, or A2 and/or A3 of 403 of FIG. 4E) of the flexible display 162 in the partially folded state (e.g., the intermediate folded state). For example, the electronic device 101 may display a first screen through the cover display 161 (e.g., A1 of 203 of FIG. 2C, 303 of FIG. 3C, 403 of FIG. 4D) in the fully folded state in operation 501 and, in operation 507, display a screen to which the default UI is applied in the partially folded state (e.g., the intermediated folded state) based on the unfolding operation, and then display the first screen again through the cover display 161 (e.g., A1 of 203 of FIG. 2C, 303 of FIG. 3C, 403 of FIG. 4D) in the fully folded state based on the folding operation (e.g., the first folding operation).

In operation 511, the electronic device 101 may provide the default UI based on identifying the unfolding operation (e.g., the second unfolding operation) after providing the default UI in the third display area (e.g., a display area exposed to the outside in the partially folded state (e.g., the intermediate folded state)) (e.g., 202b of FIG. 2D, 302c of FIG. 3C, A1 of 403 of FIG. 4F, or A2 and/or A3 of 403 of FIG. 4E) of the flexible display 162 in the partially folded state (e.g., the intermediate folded state). For example, providing the default UI in the fully unfolded state may be displaying a screen irrelevant to the folding AI function. There is no limit to the default UI provided in the fully unfolded state. For example, the electronic device 101 may display the screen of the first application on the flexible display 162 (e.g., 202 of FIG. 2A, 02 of FIG. 3A, the flexible display oFIG. 4A, or 403 of FIG. 4B) by changing the layout of the screen of the first application displayed on the cover display 161 (e.g., 203 of FIG. 2C, 303 of FIG. 3C, A1 of 403 of FIG. 4D) to provide the default UI in the fully unfolded state.

In operation 513, according to an embodiment, the electronic device 101 may identify the folding operation (e.g., the second folding operation). According to an embodiment, the electronic device 101 may provide the default UI in the partially folded state (e.g., the intermediate folded state) based on identifying the folding operation (e.g., the second folding operation) after providing the default UI to the flexible display 162 (e.g., 202 of FIG. 2A, 02 of FIG. 3A, the flexible display of FIG. 4A, or 403 of FIG. 4B) in the fully unfolded state. For example, providing the default UI in the partially folded state (e.g., the intermediate folded state) based on the folding operation (e.g., the second folding operation) may be not displaying a screen. Displaying the screen to which the default UI is applied in the partially folded state (e.g., the intermediate folded state) based on the folding operation (e.g., the second folding operation) may be understood as not displaying the screen. For example, providing the default UI in the partially folded state (e.g., the intermediate folded state) based on the folding operation (e.g., the second folding operation) may be displaying the default screen. Displaying the screen to which the default UI is applied in the partially folded state (e.g., the intermediate folded state) based on the folding operation (e.g., the second folding operation) may be displaying the default screen. There is no limit to the type of default screen. For example, the default screen may be determined based on a previously displayed screen. For example, the default screen may be determined regardless of a previously displayed screen. For example, the default screen may be a screen to which a function other than the folding AI function is applied.

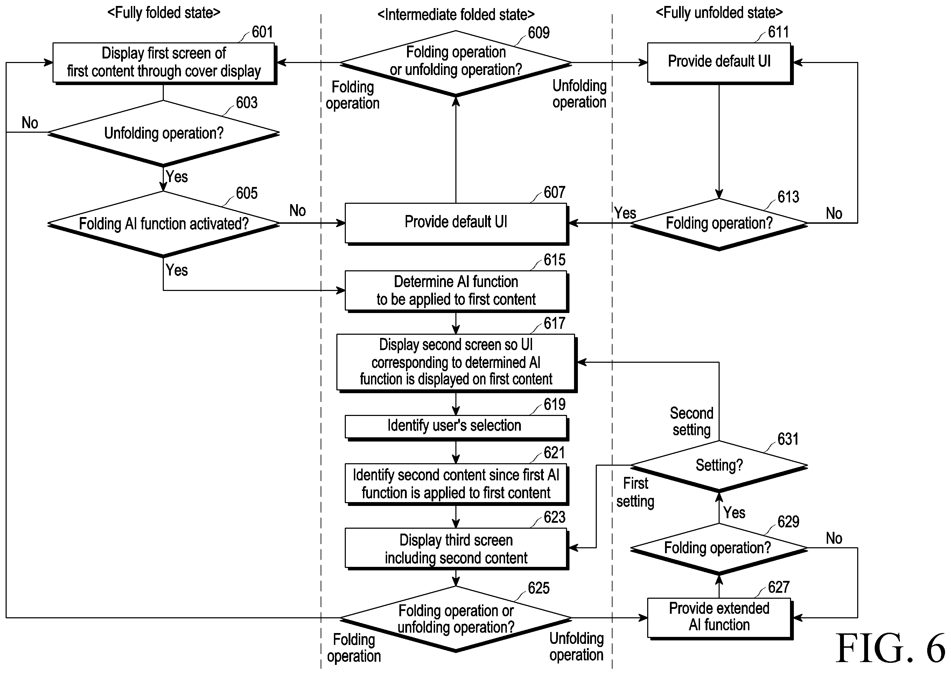

In operation 515, according to an embodiment, the electronic device 101 may provide the folding AI function. The electronic device 101 may provide the folding AI function in the partially folded state (e.g., the intermediate folded state). The electronic device 101 may provide the folding AI function by identifying the unfolding operation (e.g., the first unfolding operation) based on activation of the folding AI function. The electronic device 101 may execute the folding AI function by identifying the unfolding operation (e.g., the first unfolding operation) based on the activation of the folding AI function. For example, the electronic device 101 may determine at least one AI function to be applied to the content displayed on the screen among a plurality of AI functions allocated to the application based on identifying the unfolding operation (e.g., the first unfolding operation) as a trigger event. For example, the AI functions allocated to each application (e.g., camera application, note application, gallery application, call application, video application, SNS application, Internet application, game application) may differ. For example, the plurality of AI functions or one AI function may be allocated to the application (e.g., camera application, note application, gallery application, call application, video application, SNS application, Internet application, game application). For example, the AI functions may be allocated to content displayed on the screen of the application (e.g., a camera application, a note application, a gallery application, a call application, a video application, an SNS application, an Internet application, or a game application). If the content displayed on the screen changes, the allocated AI function may also change. The AI function may be determined according to which content is displayed on the screen of which application. According to an embodiment, the electronic device 101 may provide the folding AI function in the partially folded state (e.g., the intermediate folded state) by identifying the unfolding operation (e.g., the first unfolding operation) based on the activation of the folding AI function. For example, the electronic device 101 may provide the folding AI function through the third display area (e.g., a display area exposed to the outside in the partially folded state (e.g., the intermediate folded state)) (e.g., 202b of FIG. 2D, 302c of FIG. 3C, A1 of 403 of FIG. 4F, or A2 and/or A3 of 403 of FIG. 4E) of the flexible display 162 in the partially folded state (e.g., the intermediate folded state) by identifying the unfolding operation (e.g., the first unfolding operation) based on the activation of the folding AI function. For example, the electronic device 101 may provide a UI corresponding to the AI function to be applied to the first content in the partially folded state (e.g., the intermediate folded state) based on identifying the unfolding operation (e.g., the first unfolding operation) after displaying the first screen of the first application including the first content through the cover display 161. This is described in detail with reference to FIG. 6 (e.g., operations 615 to 623 of FIG. 6) and the following embodiments.

In operation 517, according to an embodiment, the electronic device 101 may identify the folding operation (e.g., the first folding operation) or the unfolding operation (e.g., the second unfolding operation). According to an embodiment, the electronic device 101 may perform operation 501 based on identifying the folding operation (e.g., the first folding operation) after providing the folding AI function through the third display area (e.g., a display area exposed to the outside in the partially folded state (e.g., the intermediate folded state)) (e.g., 202b of FIG. 2D, 302c of FIG. 3C, A1 of 403 of FIG. 4F, or A2 and/or A3 of 403 of FIG. 4E) of the flexible display 162 in the partially folded state (e.g., the intermediate folded state). For example, the electronic device 101 may display a first screen through the cover display 161 (e.g., A1 of 203 of FIG. 2C, 303 of FIG. 3C, 43 of FIG. 4D) in the fully folded state in operation 501 and, in operation 515, provide the folding AI function in the partially folded state (e.g., the intermediated folded state) based on the unfolding operation, and then display the first screen again through the cover display 161 (e.g., A1 of 203 of FIG. 2C, 303 of FIG. 3C, 43 of FIG. 4D) in the fully folded state based on the folding operation (e.g., the first folding operation).

In operation 519, according to an embodiment, the electronic device 101 may provide the extended AI function. For example, the electronic device 101 may provide the extended AI function in the fully folded state based on identifying the unfolding operation (e.g., the second unfolding operation) after providing the folding AI function through the third display area (e.g., a display area exposed to the outside in the partially folded state (e.g., the intermediate folded state)) (e.g., 202b of FIG. 2D, 302c of FIG. 3C, A1 of 403 of FIG. 4F, or A2 and/or A3 of 403 of FIG. 4E) of the flexible display 162 in the partially folded state (e.g., the intermediate folded state). The extended AI function may include an operation of displaying a screen to which an AI function is applied and/or a screen including a UI corresponding to the AI function through the flexible display 162 (e.g., 202 of FIG. 2A, 302 of FIG. 3A, the flexible display ofFIG. 4A, or 403 of FIG. 4B) in the fully unfolded state. For example, compared to the area of the screen to which the AI function of operation 515 is applied, the area of the screen to which the extended AI function of operation 519 is applied may be wider. The extended AI function is described in detail with reference to FIG. 6 (e.g., operation 627 of FIG. 6) and the following embodiments.

In operation 521, according to an embodiment, the electronic device 101 may identify the folding operation (e.g., the second folding operation). According to an embodiment, the electronic device 101 may perform operation 515 in the partially folded state (e.g., the intermediate folded state) based on identifying the folding operation (e.g., the second folding operation) after providing the extended AI function through the flexible display 162 (e.g., 202 of FIG. 2A, 302 of FIG. 3A, the flexible display ofFIG. 4A, or 403 of FIG. 4B) in the fully unfolded state. For example, the electronic device 101 may provide the AI function through the narrow area of the flexible display 162 in the partially folded state (e.g., the intermediate folded state) based on identifying the folding operation (e.g., the second folding operation) after providing the AI function extended through the wide area of flexible display 162 in the fully unfolded state.

The folding AI function and the extended AI function are described with reference to FIG. 6 and the following embodiments.

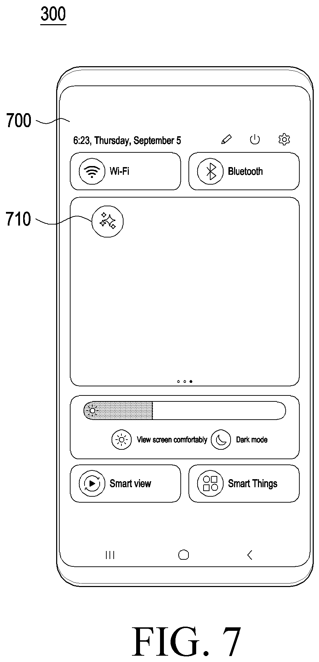

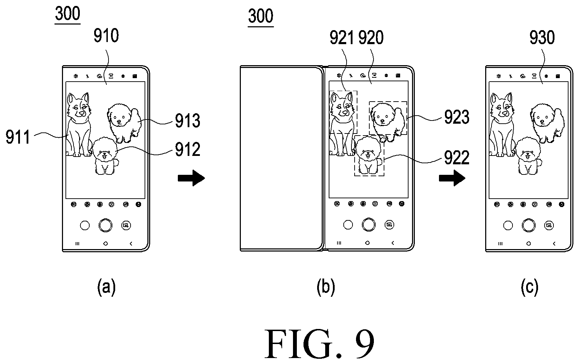

FIG. 6 is a flowchart illustrating a method of operating an electronic device according to an embodiment. FIG. 6 may be described with reference to the above-described embodiments, the embodiments of FIG. 5, the embodiments of FIG. 7 to FIG. 9, and the following embodiments. FIG. 7 is a view illustrating operations of an electronic device according to an embodiment. FIG. 8 is a view illustrating operations of an electronic device according to an embodiment. FIG. 9 is a view illustrating operations of an electronic device according to an embodiment.

Embodiments of FIGS. 7 to 9 are described as an example of the electronic device 300 of FIG. 3A. Operations of the electronic device 200 of FIG. 2A, the electronic device 101 ofFIG. 4A, and the electronic device 400 of FIG. 4B may be understood with reference to the embodiments of FIGS. 7 to 9.

At least some of the operations of FIG. 6 may be omitted. The operation order of the operations of FIG. 6 may be changed. Operations other than the operations of FIG. 6 may be performed before, while, or after performing the operations of FIG. 6.

Referring to FIG. 6, in operation 601, according to an embodiment, the electronic device 101 may display a screen through the cover display 161. The description of operation 601 may be understood with reference to the description of operation 501 of FIG. 5. For example, in the fully folded state, the electronic device 101 may display a first screen of a first application including first content (e.g., a camera application, a note application, a gallery application, a call application, a video application, an SNS application, an Internet application, or a game application) through the cover display 161 (e.g., 203 of FIG. 2C, 33 of FIG. 3C, A1 of 403 of FIG. 4D) in the fully folded state. For example, in the fully folded state, the electronic device 101 may display the first screen of the first application (e.g., a camera application, a note application, a gallery application, a call application, a video application, a social network service (SNS) application, an Internet application, a game application) through the cover display 161 (e.g., 203 of FIG. 2C, 303 of FIG. 3C, A1 of 403 of FIG. 4D) in the fully folded state. For example, in FIG. 8(a), the electronic device 300 may display a first screen 810 including a preview screen of a camera application through the cover display 303 in the fully folded state. The preview screen may be a screen that displays an image obtained through a camera (e.g., the camera of the camera module 180 of FIG. 1) (e.g., 392 or 393 of FIG. 3B) in real-time while the camera application is being executed. In FIG. 8(a), the first screen 810 may include the first content (e.g., an image displayed on the preview screen, or an object 811, 812, 813 included in the image). The object 811, 812, 813 of the first screen 810 may be an object corresponding to an object (e.g., an animal) positioned around the electronic device 101 obtained through the camera (e.g., the camera of the camera module 180 of FIG. 1) (e.g., 392 or 393 of FIG. 3B).

In operation 603, according to an embodiment, the electronic device 101 may identify the unfolding operation. The description of operation 603 may be understood with reference to the description of operation 503 of FIG. 5. For example, in operation 601, the electronic device 101 that was displaying the screen in the fully folded state may identify the unfolding operation (e.g., the first unfolding operation) (e.g., the first change) from the fully folded state to the partially folded state (e.g., the intermediate folded state). For example, in FIG. 8(a) and FIG. 8(b), the electronic device 300 may identify the unfolding operation (e.g., the first unfolding operation) (e.g., the first change) from the fully folded state to the partially folded state (e.g., the intermediate folded state) after displaying the first screen 810.

In operation 605, according to an embodiment, the electronic device 101 may identify whether the folding AI function is activated based on identifying the unfolding operation (e.g., the first unfolding operation) from the fully folded state to the partially folded state (e.g., the intermediate folded state). The description of operation 605 may be understood with reference to the description of operation 505 of FIG. 5. According to an embodiment, whether to activate the folding AI function may be determined based on a setting. For example, in FIG. 7, the electronic device 101 may activate the folding AI function based on a selection of the icon 710 corresponding to the folding AI function displayed on the screen 700. For example, in FIG. 7, the electronic device 101 may deactivate the folding AI function based on deactivation of the icon 710 corresponding to the folding AI function displayed on the screen 700.

In operations 607 to 613, according to an embodiment, the electronic device 101 may provide the default UI by identifying the unfolding operation (e.g., the first unfolding operation) based on the deactivation of the folding AI function. The description of operations 607 to 613 may be understood with reference to the description of operations 507 to 513 of FIG. 5.

According to an embodiment, the electronic device 101 may provide an AI function (e.g., operation 515 of FIG. 5) according to the unfolding operation (e.g., the first unfolding operation) based on identifying the activation of the folding AI function in operation 605. The provision of the AI function (e.g., operation 515 of FIG. 5) is described in detail with reference to operations 615 to 623.

In operation 615, according to an embodiment, the electronic device 101 may determine the AI function to be applied to the first content. According to an embodiment, after displaying the first screen of the first application including the first content in operation 601, the electronic device 101 may determine the AI function to be applied to the first content according to the unfolding operation (e.g., the first unfolding operation) based on identifying the activation of the folding AI function in operation 605. For example, after displaying the first screen of the first application in operation 601, the electronic device 101 may identify at least one artificial intelligence (AI) function related to the execution of the first application according to the first change from the fully folded state to the partially folded state based on the activation of the folding AI function in operation 605. For example, the electronic device 101 may determine at least one AI function to be applied to the first content displayed on the screen among the plurality of AI functions allocated to the first application. For example, in FIG. 8(a) and FIG. 8(b), the electronic device 300 may determine the AI function to be applied to the first content according to the unfolding operation (e.g., the first unfolding operation) based on identifying the activation of the folding AI function after displaying the first screen 810 of the camera application including the first content (e.g., object 811, 812, 813). For example, the electronic device 101 may determine the AI function to be applied to the first content (e.g., object 811, 812, 813) among the plurality of AI functions allocated to the camera application. For example, the AI function to be applied to the first content (e.g., object 811, 812, 813) may be a search function for the first content (e.g., object 811, 812, 813), but there is no limit to the type of AI function.

In operation 617, according to an embodiment, the electronic device 101 may display the second screen so that the UI corresponding to the AI function determined in operation 615 is displayed on the first content. For example, the electronic device 101 may display the second screen in the third display area (e.g., a display area exposed to the outside in the partially folded state (e.g., the intermediate folded state)) of the flexible display 162 in the partially folded state (e.g., the intermediate folded state) so that the UI corresponding to the AI function determined in operation 615 is displayed on the first content. For example, the electronic device 101 may display a second screen including the user interface (UI) representing at least one AI function related to the execution of the first application in the display area visually exposed in the partially folded state on the flexible display 202, 302. According to an embodiment, the electronic device 101 may display the second screen so that the UI corresponding to the AI function is displayed on the first content before applying the AI function. For example, in FIG. 8(b), the second screen 820 for displaying the UI corresponding to the AI function on the first content may be displayed. For example, in FIG. 8(b), the second screen 820 may include at least one UI (e.g., the first UI 821, the second UI 822, or the third UI 823). For example, the first UI 821 may include an object indicating that a first AI function (e.g., a vision search function) may be applied to the first object 811. For example, the vision search function may be a search function for an object obtained in real-time through a camera and included in the image displayed on the preview screen. For example, the second UI 822 may include an object indicating that a second AI function may be applied to the second object 812. For example, the third UI 823 may include an object indicating that a third AI function may be applied to the third object 813. In this case, the first AI function, the second AI function, and the third AI function may be the same or different. As described above, there is no limitation on the type of AI function. When there is no AI function to be applied to the third object 813, unlike FIG. 8(b), the third UI 823 may not be displayed. According to an embodiment, the electronic device 101 may provide a sound effect indicating execution of the folding AI function while displaying the second screen of operation 617. The user who has listened to the sound effect may recognize that the folding AI function has been executed based on the unfolding operation (e.g., the first unfolding operation). According to an embodiment, the electronic device 101 may not provide any sound effect while performing operation 607. The user who has not listened to the sound effect may recognize that the folding AI function has not been executed based on the unfolding operation (e.g., the first unfolding operation).

In operation 619, according to an embodiment, the electronic device 101 may identify the user's selection for the UI displayed on the screen in the partially folded state (e.g., the intermediate folded state). For example, the user may select one of the UIs corresponding to the AI function on the second screen that allows the UI corresponding to the AI function to be displayed on the first content before applying the AI function. For example, the electronic device 101 may identify the user's selection for one of the UIs displayed on the second screen. For example, the electronic device 101 may identify a first user input for selecting a first AI function from among at least one AI function. For example, in FIG. 8(b), the electronic device 300 may identify a selection of one of the first UI 821, the second UI 822, or the third UI 823 on the second screen 820.

In operation 621, according to an embodiment, the electronic device 101 may identify the second content by applying the AI function corresponding to the selected UI to the first content. For example, the electronic device 101 may apply the selected first AI function to the first application based on a first user input for selecting the first AI function from among at least one AI function. For example, in FIG. 8(b) and (c), as the second UI 822 is selected, the electronic device 300 may identify the second content (e.g., the search result) by applying the AI function (e.g., the vision search function) corresponding to the second UI 822 to the first content (e.g., the second object 812 of the first content).

In operation 623, according to an embodiment, the electronic device 101 may display the third screen including the second content. For example, the electronic device 101 may display the third screen of the first application to which the first AI function is applied. For example, the electronic device 101 may display the third screen including the second content in the third display area (e.g., a display area exposed to the outside in the partially folded state (e.g., the intermediate folded state)) (e.g., 202b of FIG. 2D, 302c of FIG. 3C, A1 of 403 of FIG. 4F, or A2 and/or A3 of 403 of FIG. 4E) of the flexible display 162 in the partially folded state (e.g., the intermediate folded state). For example, the electronic device 101 may display the third screen of the first application to which the first AI function is applied, instead of the second screen of operation 617, based on applying the first AI function to the first application in the partially folded state. For example, in FIG. 8(c), the electronic device 300 may display the third screen 830 including a second content (e.g., the search result) that is identified by applying an AI function (e.g., the vision search function) corresponding to the second UI 822 to the first content (e.g., the second object 812 of the first content).

In operation 625, according to an embodiment, the electronic device 101 may identify the folding operation (e.g., the first folding operation) or the unfolding operation (e.g., the second unfolding operation). The description of operation 625 may be understood with reference to the description of operation 517 of FIG. 5. For example, after displaying the third screen (830 of FIG. 8(c)) including the second content (e.g., the search result), the electronic device 101 may identify the folding operation (e.g., the first folding operation) or the unfolding operation (e.g., the second unfolding operation). According to an embodiment, when the UI is not selected in operation 619, the second screen of operation 617 may be continuously displayed. In this case, the electronic device 101 may identify the folding operation (e.g., the first folding operation) or the folding operation (e.g., the second folding operation) after displaying the second screen (820 of FIG. 8B) that allows the UI corresponding to the AI function to be displayed on the first content before applying the AI function. According to an embodiment, the electronic device 101 may perform operation 601 based on identifying the folding operation (e.g., the first folding operation) after displaying the second screen (e.g., 820 of FIG. 8(b) or the third screen (e.g., 830 of FIG. 8(c)). For example, after displaying the second screen (e.g., 820 of FIG. 8(b) or the third screen (e.g., 830 of FIG. 8(c)), based on identifying the folding operation (e.g., the first folding operation), the electronic device 101 may display the first screen of the first application including the first content, which was previously displayed, through the cover display 161 (e.g., 203 of FIG. 2C, 303 of FIG. 3C, 403 of FIG. 4D). For example, the electronic device 101 displays the first screen 910 (e.g., the camera preview screen) including the first content (e.g., the first object 911, the second object 912, and the third object 913) on the cover display 303 in the fully folded state in FIG. 9(a), display the second screen 920 including the UI (e.g., 921, 922, 923) corresponding to the AI function in the third display area (e.g., a display area exposed to the outside in the partially folded state (e.g., the intermediate folded state)) (e.g., 302c of FIG. 3C) of the flexible display 162 in the partially folded state (e.g., the intermediate folded state) in FIG. 9(b), and display the third screen 930 (e.g., the camera preview screen) including the first content (e.g., the first object 911, the second object 912, and the third object 913) on the cover display 303 in the fully folded state in FIG. 9(c). The third screen 930 may correspond to the first screen 910. According to an embodiment, the electronic device 101 may perform operation 627 based on identifying the unfolding operation (e.g., the second unfolding operation) after displaying the second screen (e.g., the 820 of FIG. 8(b) or the third screen (e.g., the 830 of FIG. 8(c)).

In operation 627, according to an embodiment, the electronic device 101 may provide the extended AI function. The description of operation 627 may be understood with reference to the description of operation 519 of FIG. 5. For example, the electronic device 101 may provide the extended AI function in the fully unfolded state based on identifying the unfolding operation (e.g., the second folding operation) after providing the folding AI function through the third display area (e.g., a display area exposed to the outside in the partially folded state (e.g., the intermediate folded state)) (e.g., 202b of FIG. 2D, 302c of FIG. 3C, A1 of 403 of FIG. 4F, or A2 and/or A3 of 403 of FIG. 4E) of the flexible display 162 in the partially folded state (e.g., the intermediate folded state). The method for providing the extended AI function may differ for each application. For example, in FIG. 8(d), the electronic device 300 may display the second screen 843 (e.g., a screen corresponding to 820 of FIG. 8(b)) and the third screen 842 (e.g., a screen corresponding to 830 of FIG. 8(c)) on the flexible display 302 in the fully unfolded state based on identifying the unfolding operation (e.g., the second unfolding operation) (e.g., the second change from the partially folded state to the fully unfolded state) after displaying the second screen (e.g., 820 of FIG. 8(b)) or the third screen (e.g., 830 of FIG. 8(c)) of the camera application. The second screen 843 of FIG. 8(d) may correspond to the second screen 820 of FIG. 8(b). For example, the second screen 843 in FIG. 8(d) may include a UI (e.g., 844, 845, 846) corresponding to the AI function. The UI (e.g., 844, 845, 846) of the second screen 843 of FIG. 8(d) may correspond to the UI (e.g., 821, 822, 823) of the second screen 820 of FIG. 8(b). In FIG. 8(d), the third screen 842 may be a screen corresponding to the third screen 830 of FIG. 8(c). For example, in FIG. 8(d), the third screen 842 may include the second content (e.g., the search result) identified by applying the AI function (e.g., the vision search function) to the first content (e.g., the second object 812 of the first content). According to an embodiment, in FIG. 8(d), the electronic device 300 may identify the third content (e.g., the product search result related to the search result for the second object 812) based on the unfolding operation (e.g., the second unfolding operation) from the partially folded state (e.g., the intermediate folded state) to the fully unfolded state, and display the fourth screen 841 including the third content while displaying the second screen 843 and the third screen 842 on the flexible display 302 in the fully unfolded state. For example, the electronic device 300 may display the fourth screen 841 related to the third screen 842 on the flexible display 302 based on the analysis of the third screen 842. For example, the electronic device 300 may determine the second application for displaying the fourth screen 841 based on the analysis on the third screen 842. For example, while displaying the third screen 842, the electronic device 300 may display the fourth screen 841 of the second application related to the third screen 842. According to an embodiment, the electronic device 300 may determine the second application for displaying the fourth screen 841 based on analysis of the second content (e.g., the search result for the second object 812). For example, the electronic device 300 may select an application that may provide the product search result related to the search result for the second object 812 based on the analysis of the second content (e.g., the search result for the second object 812). For example, the electronic device 300 may identify the third content (e.g., the product search result related to the search result for the second object 812) related to the second content (e.g., the second object 812) using the selected application. For example, the electronic device 300 may display the fourth screen 841 of the second application on the flexible display 302 including the third content (e.g., the product search result related to the search result for the second object 812). Referring to FIG. 8(d), the extended AI function provided by the camera application may include an operation of providing the product search result related to the vision search result, but this is exemplary, and there is no limit to the type of operation provided by the extended AI function. According to an embodiment, in FIG. 8(d), the electronic device 300 may identify a user input for selecting the third UI 845 on the second screen 843 while displaying the second screen 843 and the third screen 842 in the fully unfolded state. Accordingly, the electronic device 300 may identify the fourth content (e.g., the search result) by applying an AI function (e.g., the vision search function) corresponding to the third UI 845 to the first content (e.g., the third object 813) and display a screen including the fourth content (e.g., the search result for the third object 813) instead of the third screen 842 (e.g., the screen including the search result for the second object 812). However, this is exemplary, and other extended AI functions are described below with reference to other drawings.

In operation 629, according to an embodiment, the electronic device 101 may identify the folding operation (e.g., the second folding operation). According to an embodiment, the electronic device 101 may perform operation 631 based on identifying the folding operation (e.g., the second folding operation) after providing the extended AI function through the flexible display 162 (e.g., 202 of FIG. 2A, 302 of FIG. 3A, the flexible display of FIG. 4A, or 403 of FIG. 4B) in the fully unfolded state. According to an embodiment, the electronic device 101 may display the screen (e.g., the second screen of operation 617 or the third screen of operation 623) in the partially folded state (e.g., the intermediate folded state) based on identifying the folding operation (e.g., the second folding operation) after providing the extended AI function through the flexible display 162 (e.g., 202 of FIG. 2A, 302 of FIG. 3A, the flexible display ofFIG. 4A, or 03 of FIG. 4B) in the fully unfolded state without performing operation 631.

In operation 631, according to an embodiment, the electronic device 101 may display different screens depending on the settings. According to an embodiment, the electronic device 101 may display the third screen including the second content in operation 623, according to a first setting, based on identifying the folding operation (e.g., the second folding operation) after providing the extended AI function through the flexible display 162 (e.g., 202 of FIG. 2A, 302 of FIG. 3A, the flexible display of FIG. 4A, or 403 of FIG. 4B) in the fully unfolded state. For example, the first setting may cause the existing AI-applied screen (e.g., the second screen) to be displayed. According to an embodiment, the electronic device 101 may display the second screen to allow the UI corresponding to the AI function to be displayed on the first content in operation 617 based on identifying the folding operation (e.g., the second folding operation) after providing the extended AI function through the flexible display 162 (e.g., 202 of FIG. 2A, 32 of FIG. 3A, the flexible display of FIG. 4A, or 403 of FIG. 4B) in the fully unfolded state. For example, the second setting may cause the existing screen (e.g., the third screen), which displays the UI corresponding to the AI function, before applying the AI function.

FIG. 10 is a view illustrating operations of an electronic device according to an embodiment, FIG. 10 may be described with reference to the above-described embodiments, the embodiments of FIGS. 5 and 6, and the following embodiments.

Referring to FIG. 10, an embodiment of a note application may be described.

Embodiments of FIG. 10 are described as an example of the electronic device 300 of FIG. 3A. Operations of the electronic device 200 of FIG. 2A, the electronic device 101 of FIG. 4A, and the electronic device 400 of FIG. 4B may be understood with reference to the embodiments of FIG. 10.

In FIG. 10(a), the electronic device 300 may display the first screen 1010 of the first application (e.g., the note application) including the first content (e.g., text and layout including the text) through the cover display 303 in the fully folded state.

After displaying the first screen 1010, the electronic device 300 may identify the unfolding operation (e.g., the first unfolding operation) from the fully folded state to the partially folded state (e.g., the intermediate folded state). The electronic device 300 may identify whether the folding AI function is activated based on identifying the unfolding operation (e.g., the first unfolding operation). Based on identifying the activation of the folding AI function, the electronic device 300 may determine the AI function to be applied to the first content (e.g., text and layout including the text) among the plurality of AI functions allocated to the first application (e.g., a note application) according to the unfolding operation (e.g., the first unfolding operation).

In FIG. 10(b), the electronic device 300 may display the second screen 1020 so that the UI corresponding to the determined AI function is displayed on the first content in the partially folded state (e.g., the intermediate folded state). For example, the electronic device 300 may display the second screen 1020 so that the UI corresponding to the AI function is displayed on the first content before applying the AI function. The second screen 1020 may include a first UI 1021 corresponding to a first AI function (e.g., an automatic formatting function), a second UI 1022 corresponding to a second AI function (e.g., a translation function), and a third UI 1023 corresponding to a third AI function (e.g., a summary function). The electronic device 300 may identify selection for the third UI 1023 among UIs included in the second screen 1020. The electronic device 300 may identify the second content by applying a third AI function (e.g., a summary function) corresponding to the selected third UI 1023 to the first content.

In FIG. 10(c), the electronic device 300 may display the third screen 1030 including second content to which the third AI function (e.g., a summary function) is applied in the partially folded state (e.g., the intermediate folded state). For example, the third screen 1030 may be a screen generated by summarizing text included in the first screen 1010. After displaying the third screen 1030, the electronic device 300 may identify the unfolding operation (e.g., the second unfolding operation).

The electronic device 300 may provide the extended AI function based on identifying the unfolding operation (e.g., the second unfolding operation). In FIG. 10(d), in the fully unfolded state, the electronic device 300 may display the screen 1043 corresponding to the second screen 1020 and the screen 1042 corresponding to the third screen 1030 including the second content to which the third AI function (e.g., a summary function) is applied so that the UI corresponding to the AI function is displayed on the first content. According to an embodiment, the electronic device 300 may display a screen 1041 corresponding to the first screen 1010 including the first content (e.g., text and layout including the text) while displaying the screen 1043 corresponding to the second screen 1020 and the screen 1042 corresponding to the third screen 1030 including the second content to which the third AI function (e.g., a summary function) is applied so that the UI corresponding to the AI function is displayed on the first content.

In FIG. 10(d), the electronic device 300 may display a screen to which another AI function is applied instead of the screen 1042 based on a selection of another UI (e.g., 1044, 1045) corresponding to the other AI function on the screen 1043 corresponding to the second screen 1020 so that the UI corresponding to the AI function is displayed on the first content.

FIG. 11 is a view illustrating operations of an electronic device according to an embodiment. FIG. 11 may be described with reference to the above-described embodiments, the embodiments of FIGS. 5 and 6, and the following embodiments.

Referring to FIG. 11, an embodiment of a gallery application is described.

Embodiments of FIG. 11 are described as an example of the electronic device 300 of FIG. 3A. Operations of the electronic device 200 of FIG. 2A, the electronic device 101 of FIG. 4A, and the electronic device 400 of FIG. 4B may be understood with reference to the embodiments of FIG. 11.

In FIG. 11(a), the electronic device 300 may display the first screen 1110 of the first application (e.g., the gallery application) including the first content (e.g., an image) through the cover display 303 in the fully folded state.

After displaying the first screen 1110, the electronic device 300 may identify the unfolding operation (e.g., the first unfolding operation) from the fully folded state to the partially folded state (e.g., the intermediate folded state). The electronic device 300 may identify whether the folding AI function is activated based on identifying the unfolding operation (e.g., the first unfolding operation). Based on identifying the activation of the folding AI function, the electronic device 300 may determine the AI function to be applied to the first content (e.g., an image) among the plurality of AI functions allocated to the first application (e.g., a gallery application) according to the unfolding operation (e.g., the first unfolding operation).

In FIG. 11(b), the electronic device 300 may display the second screen 1120 so that the UI corresponding to the determined AI function is displayed on the first content in the partially folded state (e.g., the intermediate folded state). For example, the electronic device 300 may display the second screen 1120 so that the UI corresponding to the AI function is displayed on the first content before applying the AI function. The second screen 1120 may include a first UI 1121 corresponding to a first AI function (e.g., a drawing creation function), a second UI 1122 corresponding to a second AI function (e.g., an object removal and background synthesis function), and a third UI 1123 corresponding to a third AI function (e.g., a style conversion function). The electronic device 300 may identify selection for the second UI 1122 among UIs included in the second screen 1120. The electronic device 300 may identify the second content by applying a second AI function (e.g., an object removal and background synthesis function) corresponding to the selected second UI 1122 to the first content (e.g., an image).

In FIG. 11(c), the electronic device 300 may display the third screen 1130 including second content to which the second AI function (e.g., an object removal and background synthesis function) is applied in the partially folded state (e.g., the intermediate folded state). For example, the third screen 1130 may be a screen that includes an image generated by removing an object (e.g., objects other than the puppy in the center) from the image included in the first screen 1110 and then synthesizing a background with the object-removed area. After displaying the third screen 1130, the electronic device 300 may identify the unfolding operation (e.g., the second unfolding operation).

The electronic device 300 may provide the extended AI function based on identifying the unfolding operation (e.g., the second unfolding operation). In FIG. 11(d), in the fully unfolded state, the electronic device 300 may display the screen 1143 corresponding to the second screen 1120 and the screen 1142 corresponding to the third screen 1130 including the second content to which the second AI function (e.g., an object removal and background synthesis function) is applied so that the UI corresponding to the AI function is displayed on the first content. According to an embodiment, the electronic device 300 may display a screen 1141 corresponding to the first screen 1110 including the first content (e.g., an image) while displaying the screen 1143 corresponding to the second screen 1120 and the screen 1432 corresponding to the third screen 1130 including the second content to which the second AI function (e.g., an object removal and background synthesis function) is applied so that the UI corresponding to the AI function is displayed on the first content.

In FIG. 11(d), the electronic device 300 may display a screen to which another AI function is applied instead of the screen 1142 based on a selection of another UI (e.g., 1144, 1145, 1146) corresponding to the other AI function on the screen 1143 corresponding to the second screen 1120 so that the UI corresponding to the AI function is displayed on the first content.

FIG. 12 is a view illustrating operations of an electronic device according to an embodiment. FIG. 12 may be described with reference to the above-described embodiments, the embodiments of FIGS. 5 and 6, and the following embodiments.

Referring to FIG. 12, an embodiment of a call application is described.

Embodiments of FIG. 12 are described as an example of the electronic device 300 of FIG. 3A. Operations of the electronic device 200 of FIG. 2A, the electronic device 101 of FIG. 4A, and the electronic device 400 of FIG. 4B may be understood with reference to the embodiments of FIG. 12.

In FIG. 12(a), the electronic device 300 may display the first screen 1210 of the first application (e.g., the call application) including the first content (e.g., an icon corresponding to a call-related operation) through the cover display 303 in the fully folded state.

After displaying the first screen 1210, the electronic device 300 may identify the unfolding operation (e.g., the first unfolding operation) from the fully folded state to the partially folded state (e.g., the intermediate folded state). The electronic device 300 may identify whether the folding AI function is activated based on identifying the unfolding operation (e.g., the first unfolding operation). Based on identifying the activation of the folding AI function, the electronic device 300 may determine the AI function to be applied to the first content (e.g., an icon corresponding to a call-related operation) among the plurality of AI functions allocated to the first application (e.g., a call application) according to the unfolding operation (e.g., the first unfolding operation). In the call application, the AI function to be applied to the icon corresponding to the call-related operation may be an AI function for the call-related action.

In FIG. 12(b), the electronic device 300 may display the second screen 1220 so that the UI corresponding to the determined AI function is displayed in the partially folded state (e.g., the intermediate folded state). For example, the electronic device 300 may display the second screen 1220 so that the UI corresponding to the AI function is displayed before applying the AI function. The second screen 1220 may include a first UI 1221 corresponding to a first AI function (e.g., a real-time interpretation function) and a second UI 1222 corresponding to a second AI function (e.g., a required information search function). The electronic device 300 may identify selection for the first UI 1221 among UIs included in the second screen 1220. The electronic device 300 may identify the second content (e.g., a real-time interpretation result) by applying the first AI function (e.g., a real-time interpretation function) corresponding to the selected first UI 1221.

In FIG. 12(c), the electronic device 300 may display a third screen 1230 including second content (e.g., a real-time interpretation result 1231) to which the first AI function (e.g., a real-time interpretation function) is applied, in the partially folded state (e.g., the intermediate folded state). After displaying the third screen 1230, the electronic device 300 may identify the unfolding operation (e.g., the second unfolding operation).

The electronic device 300 may provide the extended AI function based on identifying the unfolding operation (e.g., the second unfolding operation). In FIG. 12(d), in the fully unfolded state, the electronic device 300 may display the screen 1243 (e.g., the call screen) corresponding to the first screen 1210 of the first application (e.g., a call application) including the first content (e.g., an icon corresponding to a call-related operation) and the screen 1242 corresponding to the third screen 1230 including the second content (e.g., a real-time interpretation result 1231) to which the first AI function (e.g., a real-time interpretation function) is applied. According to an embodiment, the electronic device 300 may a screen 1241 including the third content (e.g., a result of performing a map search function determined to be required according to the real-time interpretation result) to which the second AI function (e.g., a required information search function) is applied while displaying the screen 1243 (e.g., a call screen) corresponding to the first screen 1210 of the first application (e.g., a call application) including the first content (e.g., an icon corresponding to a call-related operation) and the screen 1242 corresponding to the third screen 1230 including the second content (e.g., a real-time interpretation result 1231) to which the first AI function (e.g., a real-time interpretation function) is applied.

FIG. 13 is a view illustrating operations of an electronic device according to an embodiment. FIG. 13 may be described with reference to the above-described embodiments, the embodiments of FIGS. 5 and 6, and the following embodiments.

Referring to FIG. 13, an embodiment of a video application is described.

Embodiments of FIG. 13 are described as an example of the electronic device 300 of FIG. 3A. Operations of the electronic device 200 of FIG. 2A, the electronic device 101 of FIG. A, and the electronic device 400 of FIG. 4B may be understood with reference to the embodiments of FIG. 13.

In FIG. 13(a), the electronic device 300 may display the first screen 1310 of the first application (e.g., the video application) including the first content (e.g., a video) through the cover display 303 in the fully folded state.

After displaying the first screen 1310, the electronic device 300 may identify the unfolding operation (e.g., the first unfolding operation) from the fully folded state to the partially folded state (e.g., the intermediate folded state). The electronic device 300 may identify whether the folding AI function is activated based on identifying the unfolding operation (e.g., the first unfolding operation). Based on identifying the activation of the folding AI function, the electronic device 300 may determine the AI function to be applied to the first content (e.g., a video) among the plurality of AI functions allocated to the first application (e.g., a video application) according to the unfolding operation (e.g., the first unfolding operation).

In FIG. 13(b), the electronic device 300 may display the second screen 1320 so that the UI corresponding to the determined AI function is displayed on the first content in the partially folded state (e.g., the intermediate folded state). For example, the electronic device 300 may display the second screen 1320 so that the UI corresponding to the AI function is displayed on the first content before applying the AI function. The second screen 1320 may include a first UI 1321 corresponding to a first AI function (e.g., a video content summary function), a second UI 1322 corresponding to a second AI function (e.g., an automatic translation function), and a third UI 1323 corresponding to a third AI function (e.g., a video-related information search function). The electronic device 300 may identify selection for the first UI 1321 among UIs included in the second screen 1320. The electronic device 300 may identify the second content by applying the first AI function (e.g., a video content summary function) corresponding to the selected first UI 1321 to the first content (e.g., a video).

In FIG. 13(c), the electronic device 300 may display the third screen 1330 including second content to which the first AI function (e.g., a video content summary function) is applied in the partially folded state (e.g., the intermediate folded state). For example, the third screen 1330 may be a screen that includes the video and video content summary information included in the first screen 1310. After displaying the third screen 1330, the electronic device 300 may identify the unfolding operation (e.g., the second unfolding operation).

The electronic device 300 may provide the extended AI function based on identifying the unfolding operation (e.g., the second unfolding operation). In FIG. 13(d), in the fully unfolded state, the electronic device 300 may display the screen 1342 corresponding to the second screen 1320 and a wide video screen 1341 so that the UI corresponding to the AI function is displayed on the first content.

In FIG. 13(d), the electronic device 300 may display a screen 1341 including the content to which another AI function is applied instead of the video content summary information based on a selection of another UI (e.g., 1343, 1344, 1345) corresponding to the other AI function on the screen 1342 corresponding to the second screen 1320 so that the UI corresponding to the AI function is displayed on the first content.

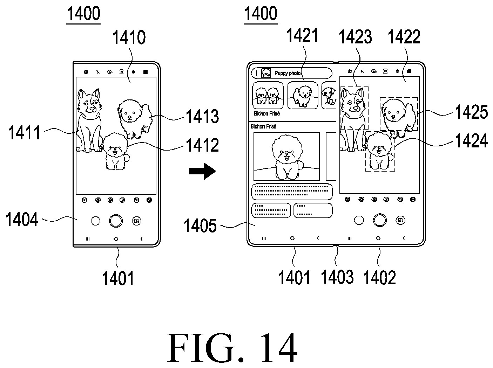

FIG. 14 is a view illustrating operations of an electronic device according to an embodiment. FIG. 14 may be described with reference to the above-described embodiments, the embodiments of FIGS. 5 and 6, and the following embodiments.

The electronic device 1400 of FIG. 14 may be the electronic device 101 of FIG. 1. For example, the electronic device 1400 of FIG. 14 may be a single-folding device. For example, the electronic device 1400 may include a first housing 1401, a second housing 1402, and a hinge 1403 that rotatably connects the first housing 1401 and the second housing 1402. As the electronic device 1400 is folded, a foldable area corresponding to the hinge 1403 may be folded in the flexible display 1405 of the electronic device 1400. The electronic device 1400 may include a cover display 1404 facing a direction opposite to the direction which the flexible display 1405 faces in the unfolded state.

In FIG. 14, the electronic device 1400 may display the first screen 1410 of the first application (e.g., a camera application) including the first content (e.g., the image displayed on the preview screen, or the object 1411, 1412, 1413 included in the image) through the cover display 1404 in the folded state.

After displaying the first screen 1410, the electronic device 1400 may identify the unfolding operation from the folded state to the unfolded state. The electronic device 1400 may identify whether the folding AI function is activated based on identifying the unfolding operation. Based on identifying the activation of the folding AI function, the electronic device 1400 may determine the AI function to be applied to the first content (e.g., the image displayed on the preview screen, or object 1411, 1412, 1413 included in the image) among the plurality of AI functions allocated to the first application (e.g., a camera application) according to the unfolding operation.

In FIG. 14, the electronic device 1400 may display the second screen 1422 so that the UI corresponding to the determined AI function is displayed on the first content in the unfolded state. For example, the electronic device 1400 may display the second screen 1422 so that the UI corresponding to the AI function is displayed on the first content before applying the AI function. The second screen 1422 may include the first UI 1423 corresponding to the first AI function (e.g., the vision search function) to be applied to the first object 1411, the second UI 1424 corresponding to the second AI function to be applied to the second object 1412, and the third UI 1425 corresponding to the third AI function to be applied to the third object 1413. The electronic device 1400 may identify selection for the second UI 1424 among UIs included in the second screen 1422. The electronic device 1400 may identify the second content by applying the second AI function (e.g., the vision search function) corresponding to the selected second UI 1424 to the first content (e.g., the second object 1412).

In FIG. 14, the electronic device 300 may display the third screen 1421 including the second content (e.g., the search result for the second object 1412) to which the second AI function (e.g., the vision search function) is applied in the unfolded state. The electronic device 300 may identify the folding operation after displaying the third screen 1421.

The electronic device 300 may display the previously displayed screen 1410 on the cover display 1404 based on identifying the folding operation.

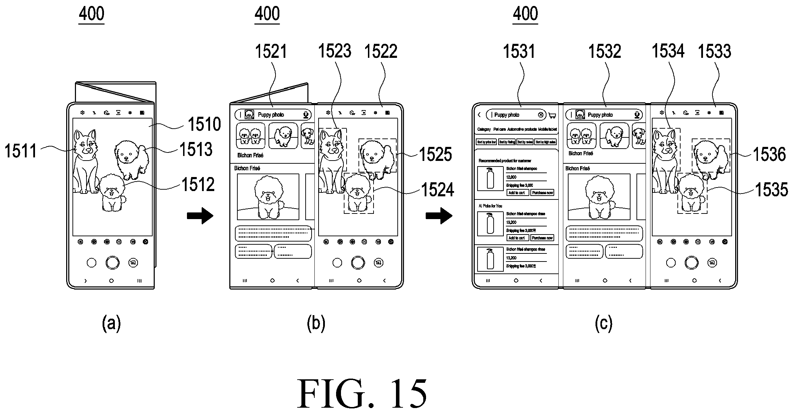

FIG. 15 is a view illustrating operations of an electronic device according to an embodiment. FIG. 15 may be described with reference to the above-described embodiments, the embodiments of FIGS. 5 and 6, and the following embodiments.

The electronic device 400 of FIG. 15 may be the electronic device 400 of FIG. 4B.

In FIG. 15(a), the electronic device 400 may display the first screen 1510 of the first application (e.g., a camera application) including the first content (e.g., the image displayed on the preview screen, or object 1511, 1512, 1513 included in the image) through a partial area (e.g., A1 of FIG. 4D) of the flexible display 403 in the fully folded state.

After displaying the first screen 1510, the electronic device 400 may identify the unfolding operation from the fully folded state to the partially folded state (e.g., the intermediate folded state). The electronic device 1400 may identify whether the folding AI function is activated based on identifying the unfolding operation. Based on identifying the activation of the folding AI function, the electronic device 1400 may determine the AI function to be applied to the first content (e.g., the image displayed on the preview screen, or object 1511, 1512, 1513 included in the image) among the plurality of AI functions allocated to the first application (e.g., a camera application) according to the unfolding operation.

In FIG. 15(b), the electronic device 400 may display the second screen 1522 so that the UI corresponding to the determined AI function is displayed on the first content through a partial area (e.g., A3 of FIG. 4E) of the flexible display 403 in the partially folded state (e.g., the intermediate folded state). For example, the electronic device 400 may display the second screen 1522 so that the UI corresponding to the AI function is displayed on the first content before applying the AI function. The second screen 1522 may include the first UI 1523 corresponding to the first AI function (e.g., the vision search function) to be applied to the first object 1511, the second UI 1524 corresponding to the second AI function to be applied to the second object 1512, and the third UI 1525 corresponding to the third AI function to be applied to the third object 1513. The electronic device 400 may identify selection for the second UI 1524 among UIs included in the second screen 1522. The electronic device 1400 may identify the second content by applying the second AI function (e.g., the vision search function) corresponding to the selected second UI 1524 to the first content (e.g., the second object 1512).

In FIG. 15(b), the electronic device 400 may display the third screen 1521 including the second content (e.g., a search result for the second object 1512) to which the second AI function (e.g., the vision search function) is applied through a partial area (e.g., A4 of FIG. 4E) of the flexible display 403 in the partially folded state (e.g., the intermediate folded state). After displaying the third screen 1521, the electronic device 400 may identify the unfolding operation from the partially folded state (e.g., the intermediate folded state) to the fully unfolded state. The electronic device 400 may provide an extended AI function based on identifying the unfolding operation from the partially folded state (e.g., the intermediate folded state) to the fully unfolded state.

In FIG. 15(c), the electronic device 400 may identify the third content (e.g., the product search result related to the search result for the second object 1512) related to the second content (e.g., the search result for the second object 1512), and display 1531 including the third content (e.g., the product search result related to the search result for the second object 1512) through the partial area (e.g., A1 ofFIG. 4A) of the flexible display 403 while displaying the screen 1532 including the second content (e.g., the search result for the second object 1512) to which the AI function is applied and the screen 1533 including the UI (e.g., 1534, 1535, 1536) corresponding to the AI function.

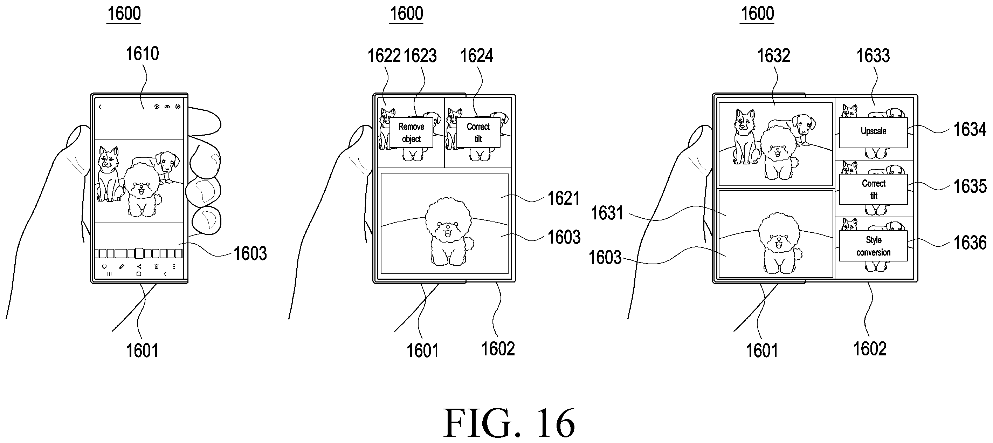

FIG. 16 is a view illustrating operations of an electronic device according to an embodiment. FIG. 16 may be described with reference to the above-described embodiments, the embodiments of FIGS. 5 and 6, and the following embodiments.

The electronic device 1600 of FIG. 16 may be the electronic device 101 of FIG. 1. For example, the electronic device 1600 of FIG. 16 may be a device including a rollable display 1603. For example, the electronic device 1600 may include a first housing 1601 and a second housing 1602 that is movable with respect to the first housing 1601. As the second housing 1602 moves, the area of the rollable display 1603 exposed to the outside may increase. A state in which the area of the rollable display 1603 that is exposed to the outside is the minimum may be referred to as a minimum state. A state in which the area of the rollable display 1603 that is exposed to the outside is the maximum may be referred to as a maximum state. The intermediate state that changes from the minimum state to the maximum state may be referred to as an intermediate state. FIG. 16 illustrates the minimum state, the intermediate state, and the maximum state from left to right.

In FIG. 16, the electronic device 1600 may display the first screen 1610 of the first application (e.g., a gallery application) including the first content (e.g., an image) in the minimum state.

After displaying the first screen 1610, the electronic device 1600 may identify a rolling operation to the intermediate state. The electronic device 1600 may identify whether a rolling AI function (e.g., a function corresponding to the above-described folding AI function) is activated based on identifying the rolling operation. Based on identifying the activation of the rolling AI function, the electronic device 1600 may determine the AI function to be applied to the first content (e.g., an image) among the plurality of AI functions allocated to the first application (e.g., a gallery application) according to the rolling operation.

In FIG. 16, the electronic device 1600 may display the second screen 1622 so that the UI corresponding to the determined AI function is displayed on the first content in the intermediate state. For example, the electronic device 1600 may display the second screen 1622 so that the UI corresponding to the AI function is displayed on the first content before applying the AI function. The second screen 1622 may include a first UI 1623 corresponding to a first AI function (e.g., an object removal function) and a second UI 1624 corresponding to a second AI function (e.g., an inclination correction function). The electronic device 1600 may identify selection for the first UI 1623 among UIs included in the second screen 1622. The electronic device 1600 may identify the second content by applying the first AI function (e.g., an object removal function) corresponding to the selected first UI 1623 to the first content (e.g., an image).

In FIG. 16, the electronic device 1600 may display the third screen 1621 including the second content to which the first AI function (e.g., an object removal function) is applied in the intermediate state. For example, the third screen 1621 may be a screen that includes an image generated by removing an object (e.g., objects other than the puppy in the center) from the image included in the first screen 1610 and then synthesizing a background with the object-removed area. The electronic device 1600 may identify a continuous rolling operation after displaying the third screen 1621.

The electronic device 1600 may provide the extended AI function based on identifying the continuous rolling operation. In FIG. 16, in the maximum state, the electronic device 1600 may display the screen 1633 corresponding to the second screen 1622 and the screen 1631 corresponding to the third screen 1621 including the second content to which the first AI function (e.g., an object removal function) is applied so that the UI corresponding to the AI function is displayed on the first content. According to an embodiment, the electronic device 1600 may display a screen 1632 corresponding to the first screen 1610 including the first content (e.g., an image) while displaying the screen 1633 corresponding to the second screen 1622 and the screen 1631 corresponding to the third screen 1621 including the second content to which the first AI function (e.g., an object removal function) is applied so that the UI corresponding to the AI function is displayed on the first content.

In FIG. 16, the electronic device 300 may display a screen to which another AI function is applied instead of the screen 1631 based on a selection of another UI (e.g., 1634, 1635, 1636) corresponding to the other AI function on the screen 1633 corresponding to the second screen 1622 so that the UI corresponding to the AI function is displayed on the first content.

It may be understood by one of ordinary skill in the art that embodiments described herein may be applied interchangeably within the applicable scope. For example, it will be understood by one of ordinary skill in the art that at least some operations of an embodiment described in the disclosure may be omitted and applied, or at least some operations of an embodiment may be interchangeably applied.

The disclosure is not limited to the above-described contents, and other modifications not mentioned will be apparent to one of ordinary skill in the art from the disclosure.

Effects obtainable from the disclosure are not limited to the above-mentioned effects, and other effects not mentioned may be apparent to one of ordinary skill in the art from the following description.

According to an embodiment, an electronic device 101, 200, 300 capable of being arranged in a folding state including a fully folded state, a partially folded state and a fully unfolded state may comprise a housing 201, 301 including a first housing 230, 320, a second housing 210, 310, and a third housing 220, 330, a first hinge structure 280, 370 configured to rotatably connect the first housing 230, 320 and the second housing 210, 310, a second hinge structure 270, 380 configured to rotatably connect the second housing 210, 310 and the third housing 220, 330, a first display 202, 302 including a first display area corresponding to the first housing 230, 320, a second display area corresponding to the second housing 210, 310, and a third display area corresponding to the third housing 220, 330, a second display 203, 303 configured to face a direction opposite to a direction which the first display 202, 302 faces in the fully unfolded state of the electronic device 101, 200, 300 , at least one sensor 176 including sensing circuitry, at least one processor 120 including processing circuitry, and memory 130 storing instructions. The instructions may, when executed by the at least one processor 120 individually or collectively, cause the electronic device 101, 200, 300 to identify a folding state of the electronic device 101, 200, 300. The instructions may, when executed by the at least one processor 120 individually or collectively, cause the electronic device 101, 200, 300 to display, in the fully folded state, a first screen of a first application through the second display 203, 303. The instructions may, when executed by the at least one processor 120 individually or collectively, cause the electronic device 101, 200, 300 to, based on identifying a first change from the fully folded state to the partially folded state, identify at least one artificial intelligence AI function associated with execution of the first application, and display, in a display area of the first display 202, 302 visually exposed in the partially folded state, a second screen including a user interface UI indicating the at least one AI function. The instructions may, when executed by the at least one processor 120 individually or collectively, cause the electronic device 101, 200, 300 to, based on a first user input for selecting a first AI function among the at least one AI function, apply the selected first AI function to the first application.

The instructions may, when executed by the at least one processor 120 individually or collectively, cause the electronic device 101, 200, 300 to, in the partially folded state, based on applying the first AI function to the first application, display, instead of the second screen, a third screen of the first application to which the first AI function is applied. The instructions may, when executed by the at least one processor 120 individually or collectively, cause the electronic device 101, 200, 300 to, based on identifying a second change from the partially folded state to the fully unfolded state, display the second screen and the third screen on the first display 202, 302.

According to an embodiment, the instructions may, when executed by the at least one processor 120 individually or collectively, cause the electronic device 101, 200, 300 to, based on identifying the first change from the fully folded state to the partially folded state, determine AI functions to be applied to a first object and a second object included in the first screen. The instructions may, when executed by the at least one processor 120 individually or collectively, cause the electronic device 101, 200, 300 to, while displaying the second screen in the partially folded state, display a first UI corresponding to the first object and a second UI corresponding to the second object. The instructions may, when executed by the at least one processor 120 individually or collectively, cause the electronic device 101, 200, 300 to, while displaying the second screen and the third screen in the fully unfolded state, based on a second user input for selecting the second UI on the second screen, apply a second AI function corresponding to the second UI to the first application. The instructions may, when executed by the at least one processor 120 individually or collectively, cause the electronic device 101, 200, 300 to, in the fully unfolded state, display, instead of the third screen, a fourth screen of the first application to which the second AI function is applied in an area where the third screen was displayed.

According to an embodiment, the instructions may, when executed by the at least one processor 120 individually or collectively, cause the electronic device 101, 200, 300 to, while displaying the second screen and the third screen in the fully unfolded state, display the first screen on the first display 202, 302.

According to an embodiment, the instructions may, when executed by the at least one processor 120 individually or collectively, cause the electronic device 101, 200, 300 to, based on identifying the second change from the partially folded state to the fully unfolded state, while displaying the second screen and the third screen in the fully unfolded state, display a fifth screen related to the third screen on the first display 202, 302.

According to an embodiment, the instructions may, when executed by the at least one processor 120 individually or collectively, cause the electronic device 101, 200, 300 to, based on analysis of the third screen, determine a second application to display the fifth screen. The instructions may, when executed by the at least one processor 120 individually or collectively, cause the electronic device 101, 200, 300 to display the fifth screen of the second application related to the third screen.

According to an embodiment, the instructions may, when executed by the at least one processor 120 individually or collectively, cause the electronic device 101, 200, 300 to, based on identifying the first change from the fully folded state to the partially folded state, determine whether a folding AI function is activated. The folding AI function may be a function that determines the at least one AI function based on identifying the first change from the fully folded state to the partially folded state. The instructions may, when executed by the at least one processor 120 individually or collectively, cause the electronic device 101, 200, 300 to, based on identifying activation of the folding AI function, determine the at least one AI function, and display, in the partially folded state, the second screen. The instructions may, when executed by the at least one processor 120 individually or collectively, cause the electronic device 101, 200, 300 to, based on identifying deactivation of the folding AI function, display, in the partially folded state, a screen to which a default UI is applied.

According to an embodiment, the instructions may, when executed by the at least one processor 120 individually or collectively, cause the electronic device 101, 200, 300 to, while displaying the second screen, provide a sound effect indicating execution of the folding AI function.

According to an embodiment, in an unfolded state of the electronic device 101, 200, 300, the second housing 210, 310 may be disposed between the first housing 230, 320 and the third housing 220, 330.

According to an embodiment, the fully folded state may be a state in which none of the first display area, the second display area, or the third display area is visually exposed. The partially folded state may be a state in which one of the first display area, the second display area, or the third display area is visually exposed. The fully unfolded state may be a state in which all of the first display area, the second display area, and the third display area are visually exposed.

According to an embodiment, a method for operating an electronic device 101, 200, 300 may be provided. In the method, the electronic device 101, 200, 300 may comprise a housing 201, 301 including a first housing 230, 320, a second housing 210, 310, and a third housing 220, 330, a first hinge structure 280, 370 configured to rotatably connect the first housing 230, 320 and the second housing 210, 310, a second hinge structure 270, 380 configured to rotatably connect the second housing 210, 310 and the third housing 220, 330, a first display 202, 302 including a first display area corresponding to the first housing 230, 320, a second display area corresponding to the second housing 210, 310, and a third display area corresponding to the third housing 220, 330, a second display 203, 303 configured to face a direction opposite to a direction which the first display 202, 302 faces in an unfolded state of the electronic device 101, 200, 300 , at least one sensor 176 including sensing circuitry, at least one processor 120 including processing circuitry, and memory 130 storing instructions. The method may comprise identifying a first folding angle (e.g., a first folding state) between the first housing 230, 320 and the second housing 210, 310 and a second folding angle (e.g., a second folding state) between the second housing 210, 310 and the third housing 220, 330 using the at least one sensor 176. The method may comprise identifying a folding state of the electronic device 101, 200, 300. The folding state may include a fully folded state, a partially folded state, and a fully unfolded state. The method may comprise, displaying, in the fully folded state, a first screen of a first application through the second display 203, 303. The method may comprise, based on identifying a first change from the fully folded state to the partially folded state, identifying at least one artificial intelligence (AI) function associated with execution of the first application, and display, in a display area visually exposed in the partially folded state of the first display 202, 302, a second screen including a user interface (UI) indicating the at least one AI function. The method may comprise, based on a first user input for selecting a first AI function among the at least one AI function, applying the selected first AI function to the first application.

According to an embodiment, the method may comprise, in the partially folded state, based on applying the first AI function to the first application, displaying, instead of the second screen, a third screen of the first application to which the first AI function is applied. The method may comprise, based on identifying a second change from the partially folded state to the fully unfolded state, displaying the second screen and the third screen on the first display 202, 302.

According to an embodiment, the method may comprise, based on identifying the first change from the fully folded state to the partially folded state, determining AI function(s) to be applied to a first object and a second object included in the first screen. The method may comprise, while displaying the second screen in the partially folded state, displaying a first UI corresponding to the first object and a second UI corresponding to the second object. The method may comprise, while displaying the second screen and the third screen in the fully unfolded state, based on a second user input for selecting the second UI on the second screen, applying a second AI function corresponding to the second UI to the first application. The method may comprise, in the fully unfolded state, displaying, instead of the third screen, a fourth screen of the first application to which the second AI function is applied in an area where the third screen was displayed.

According to an embodiment, the method may comprise, while displaying the second screen and the third screen in the fully unfolded state, displaying the first screen on the first display 202, 302.

According to an embodiment, the method may comprise, based on identifying the second change from the partially folded state to the fully unfolded state, while displaying the second screen and the third screen in the fully unfolded state, displaying a fifth screen related to the third screen on the first display 202, 302.

According to an embodiment, the method may comprise, based on analysis of the third screen, determining a second application to display the fifth screen. The method may comprise displaying the fifth screen of the second application related to the third screen.

According to an embodiment, the method may comprise identifying whether the folding AI function is activated based on identifying a first change from the fully folded state to the partially folded state. The folding AI function may be a function that determines the at least one AI function based on identifying the first change from the fully folded state to the partially folded state. The method may comprise, based on identifying activation of the folding AI function, determining the at least one AI function, and displaying, in the partially folded state, the second screen. The method may comprise, based on identifying deactivation of the folding AI function, displaying a screen to which a default UI is applied in the partially folded state.

According to an embodiment, the method may comprise, while displaying the second screen, providing a sound effect indicating execution of the folding AI function.

According to an embodiment, in the method, in an unfolded state of the electronic device 101, 200, 300, the second housing 210, 310 may be disposed between the first housing 230, 320 and the third housing 220, 330.

According to an embodiment, in the method, the fully folded state may be a state in which none of the first display area, the second display area, or the third display area is visually exposed. The partially folded state may be a state in which one of the first display area, the second display area, or the third display area is visually exposed. The fully unfolded state may be a state in which all of the first display area, the second display area, and the third display area are visually exposed.

According to an embodiment, in a non-transitory, computer-readable storage medium storing instructions, the instructions may, when individually or collectively executed by at least one processor 120 of an electronic device 101, 200, 300, cause the electronic device 101, 200, 300 to perform at least one operation. In the storage medium, the electronic device 101, 200, 300 may comprise a housing 201, 301 including a first housing 230, 320, a second housing 210, 310, and a third housing 220, 330, a first hinge structure 280, 370 configured to rotatably connect the first housing 230, 320 and the second housing 210, 310, a second hinge structure 270, 380 configured to rotatably connect the second housing 210, 310 and the third housing 220, 330, a first display 202, 302 including a first display area corresponding to the first housing 230, 320, a second display area corresponding to the second housing 210, 310, and a third display area corresponding to the third housing 220, 330, a second display 203, 303 configured to face a direction opposite to a direction which the first display 202, 302 faces in an unfolded state of the electronic device 101, 200, 300 , at least one sensor 176 including sensing circuitry, at least one processor 120 including processing circuitry, and memory 130 storing instructions. The at least one operation may comprise identifying a first folding angle (e.g., a first folding state) between the first housing 230, 320 and the second housing 210, 310 and a second folding angle (e.g., a second folding state) between the second housing 210, 310 and the third housing 220, 330 using the at least one sensor 176. The at least one operation may comprise identifying a folding state of the electronic device 101, 200, 300. The folding state may include a fully folded state, a partially folded state, and a fully unfolded state. The at least one operation may comprise, displaying, in the fully folded state, a first screen of a first application through the second display 203, 303. The at least one operation may comprise, based on identifying a first change from the fully folded state to the partially folded state, identifying at least one artificial intelligence (AI) function associated with execution of the first application, and display, in a display area visually exposed in the partially folded state of the first display 202, 302, a second screen including a user interface (UI) indicating the at least one AI function. The at least one operation may comprise, based on a first user input for selecting a first AI function among the at least one AI function, applying the selected first AI function to the first application.

According to an embodiment, in the storage medium, the at least one operation may comprise, in the partially folded state, based on applying the first AI function to the first application, displaying, instead of the second screen, a third screen of the first application to which the first AI function is applied. The at least one operation may comprise, based on identifying a second change from the partially folded state to the fully unfolded state, displaying the second screen and the third screen on the first display 202, 302.

According to an embodiment, in the storage medium, the at least one operation may comprise, based on identifying the first change from the fully folded state to the partially folded state, determining AI function(s) to be applied to a first object and a second object included in the first screen. The at least one operation may comprise, while displaying the second screen in the partially folded state, displaying a first UI corresponding to the first object and a second UI corresponding to the second object. The at least one operation may comprise, while displaying the second screen and the third screen in the fully unfolded state, based on a second user input for selecting the second UI on the second screen, applying a second AI function corresponding to the second UI to the first application. The at least one operation may comprise, in the fully unfolded state, displaying, instead of the third screen, a fourth screen of the first application to which the second AI function is applied in an area where the third screen was displayed.

According to an embodiment, in the storage medium, the at least one operation may comprise, while displaying the second screen and the third screen in the fully unfolded state, displaying the first screen on the first display 202, 302.

According to an embodiment, in the storage medium, the at least one operation may comprise, based on identifying the second change from the partially folded state to the fully unfolded state, while displaying the second screen and the third screen in the fully unfolded state, displaying a fifth screen related to the third screen on the first display 202, 302.

According to an embodiment, in the storage medium, the at least one operation may comprise, based on analysis of the third screen, determining a second application to display the fifth screen. The at least one operation may comprise displaying the fifth screen of the second application related to the third screen.

According to an embodiment, in the storage medium, the at least one operation may comprise identifying whether the folding AI function is activated based on identifying a first change from the fully folded state to the partially folded state. The folding AI function may be a function that determines the at least one AI function based on identifying the first change from the fully folded state to the partially folded state. The at least one operation may comprise, based on identifying activation of the folding AI function, determining the at least one AI function, and displaying, in the partially folded state, the second screen. The at least one operation may comprise, based on identifying deactivation of the folding AI function, displaying a screen to which a default UI is applied in the partially folded state.

According to an embodiment, in the storage medium, the at least one operation may comprise, while displaying the second screen, providing a sound effect indicating execution of the folding AI function.

According to an embodiment, in the storage medium, in an unfolded state of the electronic device 101, 200, 300, the second housing 210, 310 may be disposed between the first housing 230, 320 and the third housing 220, 330.

According to an embodiment, in the storage medium, the fully folded state may be a state in which none of the first display area, the second display area, or the third display area is visually exposed. The partially folded state may be a state in which one of the first display area, the second display area, or the third display area is visually exposed. The fully unfolded state may be a state in which all of the first display area, the second display area, and the third display area are visually exposed.

The electronic device according to various embodiments of the disclosure may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that various embodiments of the disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B," "at least one of A and B," "at least one of A or B," "A, B, or C," "at least one of A, B, and C," and "at least one of A, B, or C," may include all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," "coupled to," "connected with," or "connected to" another element (e.g., a second element), it means that the element may be coupled with the other element directly (e.g., wiredly), wirelessly, or via a third element.

As used herein, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program) including one or more instructions that are stored in a storage medium that is readable by a machine (e.g., an electronic device). For example, a processor (e.g., a controller) of the machine may invoke at least one of the one or more instructions stored in the storage medium, and execute it. This allows the machine to be operated to perform at least one function according to the at least one instruction invoked. The one or more instructions may include a code generated by a complier or a code executable by an interpreter. The storage medium readable by the machine may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method according to various embodiments of the disclosure may be included and provided in a computer program product. The computer program products may be traded as commodities between sellers and buyers. The computer program product may be distributed in the form of a machine-readable storage medium (e.g., compact disc read only memory (CD-ROM)), or be distributed (e.g., downloaded or uploaded) online via an application store (e.g., Play StoreTM), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities. Some of the plurality of entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

## Claims

1. An electronic device (101; 200; 300) capable of being arranged in a folding state including a fully folded state, a partially folded state and a fully unfolded state, comprising:
a housing (201; 301) including a first housing (230; 320), a second housing (210; 310), and a third housing (220; 330);
a first hinge structure (280; 370) configured to rotatably connect the first housing (230; 320) and the second housing (210; 310);
a second hinge structure (270; 380) configured to rotatably connect the second housing (210; 310) and the third housing (220; 330);
a first display (202; 302) including a first display area corresponding to the first housing (230; 320), a second display area corresponding to the second housing (210; 310), and a third display area corresponding to the third housing (220; 330);
a second display (203; 303) configured to face a direction opposite to a direction which the first display (202; 302) faces in the fully unfolded state of the electronic device (101; 200; 300);
at least one sensor (176) including sensing circuitry;
at least one processor (120) including processing circuitry; and
memory (130) storing instructions,
wherein the instructions, when executed by the at least one processor (120) individually or collectively, cause the electronic device (101; 200; 300) to:
identify a folding state of the electronic device (101; 200; 300);
display, in the fully folded state, a first screen of a first application through the second display (203; 303);
based on identifying a first change from the fully folded state to the partially folded state, identify at least one artificial intelligence (AI) function associated with execution of the first application, and display, in a display area of the first display (202; 302) visually exposed in the partially folded state, a second screen including a user interface (UI) indicating the at least one AI function; and
based on a first user input for selecting a first AI function among the at least one AI function, apply the selected first AI function to the first application.

2. The electronic device (101; 200; 300) of claim 1,
wherein the instructions, when executed by the at least one processor (120) individually or collectively, cause the electronic device (101; 200; 300) to:
in the partially folded state, based on applying the first AI function to the first application, display, instead of the second screen, a third screen of the first application to which the first AI function is applied; and
based on identifying a second change from the partially folded state to the fully unfolded state, display the second screen and the third screen on the first display (202; 302).

3. The electronic device (101; 200; 300) of claim 2,
wherein the instructions, when executed by the at least one processor (120) individually or collectively, cause the electronic device (101; 200; 300) to:
based on identifying the first change from the fully folded state to the partially folded state, determine AI function(s) to be applied to a first object and a second object included in the first screen;
while displaying the second screen in the partially folded state, display a first UI corresponding to the first object and a second UI corresponding to the second object;
while displaying the second screen and the third screen in the fully unfolded state, based on a second user input for selecting the second UI on the second screen, apply a second AI function corresponding to the second UI to the first application; and
in the fully unfolded state, display, instead of the third screen, a fourth screen of the first application to which the second AI function is applied in an area where the third screen was displayed.

4. The electronic device (101; 200; 300) of any one of claim 2 or 3,
wherein the instructions, when executed by the at least one processor (120) individually or collectively, cause the electronic device (101; 200; 300) to:
while displaying the second screen and the third screen in the fully unfolded state, display the first screen on the first display (202; 302).

5. The electronic device (101; 200; 300) of any one of claims 2 to 4,
wherein the instructions, when executed by the at least one processor (120) individually or collectively, cause the electronic device (101; 200; 300) to:
based on identifying the second change from the partially folded state to the fully unfolded state, while displaying the second screen and the third screen in the fully unfolded state, display a fifth screen related to the third screen on the first display (202; 302).

6. The electronic device (101; 200; 300) of any one of claim 5,
wherein the instructions, when executed by the at least one processor (120) individually or collectively, cause the electronic device (101; 200; 300) to:
based on analysis of the third screen, determine a second application to display the fifth screen; and
display the fifth screen of the second application related to the third screen.

7. The electronic device (101; 200; 300) of any one of claims 1 to 6,
wherein the instructions, when executed by the at least one processor (120) individually or collectively, cause the electronic device (101; 200; 300) to:
based on identifying the first change from the fully folded state to the partially folded state, determine whether a folding AI function is activated, wherein the folding AI function is a function that determines the at least one AI function based on identifying the change from the fully folded state to the partially folded state;
based on identifying activation of the folding AI function, determine the at least one AI function, and display, in the partially folded state, the second screen; and
based on identifying deactivation of the folding AI function, display, in the partially folded state, a screen to which a default UI is applied.

8. The electronic device (101; 200; 300) of any one of claims 1 to 7,
wherein the instructions, when executed by the at least one processor (120) individually or collectively, cause the electronic device (101; 200; 300) to:
while displaying the second screen, provide a sound effect indicating execution of the folding AI function.

9. The electronic device (101; 200; 300) of any one of claims 1 to 8,
wherein in an unfolded state of the electronic device (101; 200; 300), the second housing (210; 310) is disposed between the first housing (230; 320) and the third housing (220; 330).

10. The electronic device (101; 200; 300) of any one of claims 1 to 9, wherein:
the fully folded state is a state in which none of the first display area, the second display area, or the third display area is visually exposed;
the partially folded state is a state in which one of the first display area, the second display area, or the third display area is visually exposed; and
the fully unfolded state is a state in which all of the first display area, the second display area, and the third display area are visually exposed.

11. A method for operating an electronic device (101; 200; 300), the method comprising:
identifying a folding state of the electronic device (101; 200; 300), wherein the folding state includes a fully folded state, a partially folded state, and a fully unfolded state;
displaying, in the fully folded state, a first screen of a first application through a second display (203; 303) of the electronic device (101; 200; 300);
based on identifying a first change from the fully folded state to the partially folded state, identifying at least one artificial intelligence (AI) function associated with execution of the first application, and displaying, in a display area visually exposed in the partially folded state in a first display (202; 302) of the electronic device (101; 200; 300), a second screen including a user interface (UI) indicating the at least one AI function; and
based on a first user input for selecting a first AI function among the at least one AI function, applying the selected first AI function to the first application.

12. The method of claim 11, comprising:
in the partially folded state, based on applying the first AI function to the first application, displaying, instead of the second screen, a third screen of the first application to which the first AI function is applied; and
based on identifying a second change from the partially folded state to the fully unfolded state, displaying the second screen and the third screen on the first display (202; 302).

13. The method of claim 12, comprising:
based on identifying the first change from the fully folded state to the partially folded state, determining AI function(s) to be applied to a first object and a second object included in the first screen;
while displaying the second screen in the partially folded state, displaying a first UI corresponding to the first object and a second UI corresponding to the second object;
while displaying the second screen and the third screen in the fully unfolded state, based on a second user input for selecting the second UI on the second screen, applying a second AI function corresponding to the second UI to the first application; and
in the fully unfolded state, displaying, instead of the third screen, a fourth screen of the first application to which the second AI function is applied in an area where the third screen was displayed.

14. The method of claim 12 or 13, comprising
while displaying the second screen and the third screen in the fully unfolded state, displaying the first screen on the first display (202; 302).

15. A non-transitory, computer-readable storage medium storing instructions, the instructions, when individually or collectively executed by at least one processor (120) of an electronic device (101; 200; 300), causing the electronic device (101; 200; 300) to perform at least one operation, wherein
the at least one operation comprises:
identifying a folding state of the electronic device (101; 200; 300), wherein the folding state includes a fully folded state, a partially folded state, and a fully unfolded state;
displaying, in the fully folded state, a first screen of a first application through a second display (203; 303) of the electronic device (101; 200; 300);
based on identifying a first change from the fully folded state to the partially folded state, identifying at least one artificial intelligence (AI) function associated with execution of the first application, and displaying, in a display area visually exposed in the partially folded state in a first display (202; 302) of the electronic device (101; 200; 300), a second screen including a user interface (UI) indicating the at least one AI function; and
based on a first user input for selecting a first AI function among the at least one AI function, applying the selected first AI function to the first application.
